(19) Europäisches Patentamt
European Patent Office
Office européen des brevets

(11) **EP 2 855 095 B1**

(12) **EUROPÄISCHE PATENTSCHRIFT**

(45) Veröffentlichungstag und Bekanntmachung des Hinweises auf die Patenterteilung:
**09.07.2025 Patentblatt 2025/28**

(21) Anmeldenummer: **13720313.9**

(22) Anmeldetag: **24.04.2013**

(51) Internationale Patentklassifikation (IPC):
**B25D 11/00** (2006.01)     **B25D 16/00** (2006.01)
**B25F 5/00** (2006.01)

(52) Gemeinsame Patentklassifikation (CPC):
**B25D 16/006; B25D 11/005;** B25D 2211/003;
B25D 2211/068; B25D 2250/035; B25D 2250/131;
B25D 2250/145; B25D 2250/201; B25D 2250/221

(86) Internationale Anmeldenummer:
**PCT/EP2013/058460**

(87) Internationale Veröffentlichungsnummer:
**WO 2013/174599 (28.11.2013 Gazette 2013/48)**

(54) **SCHLAGWERKEINHEIT**

PERCUSSION UNIT

UNITÉ DE PERCUSSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.05.2012 DE 102012208870**

(43) Veröffentlichungstag der Anmeldung:
**08.04.2015 Patentblatt 2015/15**

(73) Patentinhaber: **Robert Bosch GmbH**
**70442 Stuttgart (DE)**

(72) Erfinder:
• **NITSCHE, Rainer**
**73230 Kirchheim/Teck (DE)**
• **TAUBER, Matthias**
**73087 Boll-Eckwaelden (DE)**
• **VANDAMME, Antoine**
**70839 Gerlingen (DE)**
• **SCHLESAK, Gerd**
**71732 Tamm (DE)**
• **SPRENGER, Helge**
**70806 Kornwestheim (DE)**
• **DIEM, Carsten**
**71640 Ludwigsburg (DE)**
• **FISCHER, Wolfgang**
**70839 Gerlingen (DE)**
• **HAMEDOVIC, Haris**
**71696 Moeglingen (DE)**
• **LENNARTZ, Juergen**
**73760 Ostfildern (DE)**
• **BERTSCH, Christian**
**71706 Markgroeningen (DE)**
• **VEGA ZAVALA, Mario Eduardo**
**77652 Offenburg (DE)**
• **DUESSELBERG, Achim**
**73230 Kirchheim unter Teck (DE)**

(56) Entgegenhaltungen:
WO-A1-2010/087206     DE-A1- 10 014 314
DE-A1- 10 033 362     DE-A1- 10 145 464
DE-A1- 10 212 064     JP-A- 2008 543 588
JP-B2- 5 096 327

**Beschreibung**

Stand der Technik

Es sind bereits Schlagwerkeinheiten, insbesondere für einen Bohr- und/oder Schlaghammer, mit einer Steuereinheit, die dazu vorgesehen ist, ein pneumatisches Schlagwerk zu steuern und/oder zu regeln, bekannt.

Offenbarung der Erfindung

Die Erfindung geht aus von einer Schlagwerkeinheit, die als ein nichtlineares, schwingfähiges System ausgebildet ist, insbesondere für einen Bohr- und/oder Schlaghammer, mit einer Steuereinheit, die dazu vorgesehen ist, ein pneumatisches Schlagwerk zu steuern und/oder zu regeln.

Es wird vorgeschlagen, dass die Steuereinheit dazu vorgesehen ist, in zumindest einem Betriebszustand, in dem ein Betriebsparameter als ein überkritischer Arbeitswert eingestellt ist, zu einem Wechsel von einem Leerlaufbetrieb in einen Schlagbetrieb den Betriebsparameter vorübergehend auf einen Startwert einzustellen, wobei der Betriebsparameter eine Schlagwerkdrehzahl ist und der Startwert in einem Bereich der Schlagwerkdrehzahl liegt, bei der ein Amplitudenfrequenzgang eines schwingenden Körpers des Schlagwerks eine eindeutige Lösung aufweist, und der überkritische Arbeitswert in einem Bereich der Schlagwerkdrehzahl liegt, bei der der Amplitudenfrequenzgang eine mehrdeutige Lösung aufweist, und wobei der Startwert unterhalb des überkritischen Arbeitswerts liegt. Unter einer "Schlagwerkeinheit" soll in diesem Zusammenhang insbesondere eine Einheit verstanden werden, die zum Betreiben eines Schlagwerks vorgesehen ist. Die Schlagwerkeinheit kann insbesondere eine Steuereinheit aufweisen. Die Schlagwerkeinheit kann eine Antriebseinheit und/oder Getriebeeinheit aufweisen, die zu einem Antrieb des Schlagwerks vorgesehen ist. Unter einer "Steuereinheit" soll in diesem Zusammenhang insbesondere eine Vorrichtung der Schlagwerkeinheit verstanden werden, die zu einer Steuerung oder Regelung insbesondere der Antriebseinheit und/oder des Schlagwerks vorgesehen ist. Die Steuereinheit kann bevorzugt als elektrische, insbesondere als elektronische Steuereinheit ausgebildet sein. Unter einem "Bohr- und/oder Schlaghammer" soll in diesem Zusammenhang insbesondere eine Werkzeugmaschine verstanden werden, die zu einer Bearbeitung eines Werkstücks mit einem drehenden oder nicht drehenden Bearbeitungswerkzeug vorgesehen ist, wobei das Bearbeitungswerkzeug durch die Werkzeugmaschine mit Schlagimpulsen beaufschlagt werden kann. Bevorzugt ist die Werkzeugmaschine als von einem Benutzer von Hand geführte Handwerkzeugmaschine ausgebildet. Unter einem "Schlagwerk" soll in diesem Zusammenhang insbesondere eine Vorrichtung verstanden werden, die zumindest ein Bauteil aufweist, das zu einer Erzeugung und/oder Übertragung eines Schlagimpulses, insbesondere eines axialen Schlagimpulses, auf ein in einem Werkzeughalter angeordnetes Bearbeitungswerkzeug vorgesehen ist. Ein solches Bauteil kann insbesondere ein Schläger, ein Schlagbolzen, ein Führungselement, wie insbesondere ein Hammerrohr und/oder ein Kolben, wie insbesondere ein Topfkolben, und/oder ein weiteres, dem Fachmann als sinnvoll erscheinendes Bauteil sein. Der Schläger kann den Schlagimpuls direkt auf das Bearbeitungswerkzeug übertragen oder bevorzugt indirekt. Bevorzugt kann der Schläger den Schlagimpuls auf einen Schlagbolzen übertragen, der den Schlagimpuls auf das Bearbeitungswerkzeug überträgt. Unter "vorgesehen" soll insbesondere speziell ausgelegt und/oder speziell ausgestattet verstanden werden. Unter einem "Leerlaufbetrieb" soll in diesem Zusammenhang insbesondere ein Betriebszustand des Schlagwerks verstanden werden, der durch Ausbleiben von regelmäßigen Schlagimpulsen gekennzeichnet ist oder in dem nur geringe Schlagimpulse auftreten. Unter "geringen" Schlagimpulsen sollen in diesem Zusammenhang insbesondere Schlagimpulse verstanden werden, die weniger als 50%, bevorzugt weniger als 25%, besonders bevorzugt weniger als 10% der Schlagstärke aufweisen, die für eine Bearbeitung eines Werkstücks vorgesehen ist. Bevorzugt kann das Schlagwerk einen Leerlaufmodus aufweisen, in dem es zu einem Leerlaufbetrieb vorgesehen ist. Unter einem "Schlagbetrieb" soll in diesem Zusammenhang insbesondere ein Betriebszustand des Schlagwerks verstanden werden, in dem vom Schlagwerk bevorzugt regelmäßige Schlagimpulse in einer für die Bearbeitung eines Werkstücks vorgesehenen Schlagstärke ausgeübt werden. Bevorzugt kann das Schlagwerk einen Schlagmodus aufweisen, in dem es zu einem Schlagbetrieb vorgesehen ist. Unter "regelmäßig" soll in diesem Zusammenhang insbesondere wiederkehrend verstanden werden, insbesondere mit einer vorgesehenen Frequenz. Unter einem "Betriebszustand" soll in diesem Zusammenhang insbesondere ein Modus und/oder eine Einstellung der Steuereinheit verstanden werden. Der Betriebszustand kann insbesondere von Benutzereinstellungen, Umgebungsbedingungen und weiteren Parametern des Schlagwerks abhängig sein. Unter einem "Wechsel" von einem Leerlaufbetrieb in einen Schlagbetrieb soll in diesem Zusammenhang ein Starten des Schlagwerks aus dem Leerlaufbetrieb verstanden werden. Der Wechsel in den Schlagbetrieb kann insbesondere erfolgen, wenn das Schlagwerk vom Leerlaufmodus in den Schlagmodus umgeschaltet wird. Unter einem "Startwert" soll in diesem Zusammenhang insbesondere ein stabiler Betriebsparameter verstanden werden, der zu einem zuverlässigen Starten des Schlagwerks geeignet ist. Unter "zuverlässig" soll in diesem Zusammenhang insbesondere verstanden werden, dass bei einem Umschalten des Schlagwerks vom Leerlaufmodus in den Schlagmodus in mehr als 90%, bevorzugt mehr als 95%, besonders bevorzugt mehr als 99% der Fälle der Schlagbetrieb einsetzt. Unter "vorübergehend" soll in diesem Zusammenhang insbesondere ein begrenzter Zeitraum verstanden werden. Insbesondere kann der Zeitraum kürzer als 30 Sekunden, bevorzugt kürzer als 10 Sekunden, besonders bevorzugt kürzer als 5 Sekunden sein. Es kann ein zuverlässiger Start des Schlagbetriebs erreicht werden. Ein Schlagbetrieb mit für einen Schlagwerkstart ungeeigneten Betriebsparametern kann möglich sein. Für einen Schlagwerkstart ungeeignete Betriebsparameter können als Arbeitswert zulässig sein. Ein Leerlaufbetrieb mit für einen Schlagwerkstart ungeeigneten Betriebsparametern kann möglich sein. Für einen Schlagwerkstart ungeeignete Betriebsparameter können als Leerlaufwert zulässig sein. Eine Zuverlässigkeit des Schlagwerks kann erhöht sein. Eine Leistungsfähigkeit des Schlagwerks kann erhöht sein.

Unter einem "überkritischen" Arbeitswert soll in diesem Zusammenhang insbesondere ein Betriebsparameter verstanden werden, bei dem ein erfolgreicher Übergang vom Leerlaufbetrieb in den Schlagbetrieb nicht gewährleistet ist. Insbesondere kann bei einem Schlagwerk im Schlagmodus bei einem überkritischen Arbeitswert der Schlagbetrieb in weniger als 50%, bevorzugt in weniger als 80%, besonders bevorzugt in weniger als 95% der Fälle starten. Ein Zusammenhang zwischen einem Betriebsparameter und einer Schlagamplitude eines Schlägers oder eines anderen zur Schlagerzeugung dienenden Bauteils des Schlagwerks kann insbesondere eine Hysterese aufweisen. Ein überkritischer Betriebsparameter kann insbesondere dadurch gekennzeichnet sein, dass er einen Grenzwert über- beziehungsweise unterschreitet, oberhalb oder unterhalb dessen eine Funktion der Amplitude in Abhängigkeit von dem Betriebsparameter mehrdeutig ist. Ein überkritischer Arbeitswert während eines bereits erfolgreichen Schlagbetriebs kann sich bevorzugt durch eine stabile Fortsetzung des Schlagbetriebs auszeichnen. Eine Leistung des Schlagwerks kann bei einem überkritischen Betriebsparameter erhöht sein. Eine Leistungsfähigkeit einer mit dem Schlagwerk ausgestatteten Werkzeugmaschine kann erhöht sein. Ein Betrieb des Schlagwerks mit einem überkritischen Arbeitswert kann zulässig sein. Bevorzugt kann das Schlagwerk im Leerlaufmodus in einem Leerlaufbetrieb mit einem Leerlaufwert betrieben werden, der dem überkritischen Startwert entspricht. Das Schlagwerk kann im Schlagbetrieb und im Leerlaufbetrieb mit einem überkritischen Betriebsparameter betrieben werden.

Weiter wird ein Betriebswechselsensor vorgeschlagen, der dazu vorgesehen ist, einen Wechsel eines Betriebsmodus zu signalisieren. Insbesondere kann der Betriebswechselsensor der Steuereinheit einen Wechsel vom Leerlaufmodus in den Schlagmodus signalisieren. Der Betriebswechselsensor kann dazu vorgesehen sein, einen Anpressdruck eines Werkzeugs auf ein Werkstück zu detektieren. Es kann vorteilhaft erkannt werden, wenn der Benutzer einen Bearbeitungsvorgang beginnt. Besonders vorteilhaft kann der Betriebswechselsensor ein Umschalten des Schlagwerks detektieren, insbesondere ein Öffnen und/oder Verschließen von Leerlauföffnungen und weiteren Öffnungen des Schlagwerks, die für einen Betriebsmoduswechsel vorgesehen sind. Der Betriebswechselsensor kann eine Verlagerung einer Leerlauf- und/oder Steuerhülse detektieren, die zu einem Betriebsmoduswechsel des Schlagwerks vorgesehen ist. Die Steuereinheit kann vorteilhaft erkennen, wenn ein Betriebsmoduswechsel des Schlagwerks stattfindet. Die Steuereinheit kann den Betriebsparameter vorteilhaft verändern, um den Betriebsmoduswechsel zu unterstützen und/oder zu ermöglichen. Ein Schlagbetrieb kann zuverlässig gestartet werden.

Weiter wird eine Schlagsensoreinheit vorgeschlagen, der dazu vorgesehen ist, den Schlagbetrieb zu signalisieren. Insbesondere kann die Schlagsensoreinheit der Steuereinheit signalisieren, dass das Schlagwerk den Schlagbetrieb ausführt. Ein erfolgreicher Schlagwerkstart kann von der Steuereinheit vorteilhaft erkannt werden. Ein Aussetzen des Schlagbetriebs kann von der Steuereinheit vorteilhaft erkannt werden. Insbesondere kann das Aussetzen des Schlagbetriebs, während dessen sich das Schlagwerk weiter im Schlagmodus befindet, erkannt werden. Die Steuereinheit kann das Schlagwerk erneut starten.

Es wird vorgeschlagen, dass die Schlagsensoreinheit dazu vorgesehen ist, den Schlagbetrieb durch Auswertung zumindest eines Antriebsparameters zu erkennen. Unter einem "Antriebsparameter" soll in diesem Zusammenhang insbesondere eine Drehzahl, eine Stromaufnahme und/oder eine Spannung verstanden werden. Die Schlagsensoreinheit kann den Schlagbetrieb aus der Stromaufnahme der Antriebseinheit erkennen. Eine steigende Stromaufnahme kann auf den Schlagbetrieb hinweisen. Bevorzugt kann die Schlagsensoreinheit einen Lastschätzer aufweisen. Unter einem "Lastschätzer" soll in diesem Zusammenhang insbesondere eine, dem Fachmann bekannte, regelungstechnische Einrichtung verstanden werden, die dazu vorgesehen ist, eine aus dem Schlagbetrieb resultierende Antriebslast unter Auswertung eines Drehzahlverlaufs der Antriebseinheit zu schätzen. Insbesondere kann der Lastschätzer die aus dem Schlagbetrieb resultierende Antriebslast durch eine Auswertung periodischer Drehzahlschwankungen abschätzen. Bevorzugt berücksichtigt der Lastschätzer bei der Auswertung bekannte periodische Lasten, wie eine Winkelabhängigkeit einer Übersetzung des Exzentergetriebes, zeitabhängige Schwankungen der Versorgungsspannung einer Leistungsregelung der Antriebseinheit sowie Lasten, die durch eine Massenträgheit der Antriebseinheit und von der Antriebseinheit angetriebener Teile des Schlagwerks hervorgerufen werden. Bevorzugt kann der Lastschätzer Einflüsse des Schlagbetriebs auf ein Drehzahlsignal von weiteren Einflüssen, wie zum Beispiel einer durch ein drehendes Werkzeug bei der Bearbeitung eines Werkstücks entstehenden Last, unterscheiden. Ein Schlagbetrieb kann zuverlässig erkannt werden. Das Drehzahlsignal kann zur Regelung der Antriebseinheit bereits zur Verfügung stehen. Die Schlagsensoreinheit kann das bestehende Drehzahlsignal nutzen. Zusätzliche Sensoren können vermieden werden. Ein Lastschätzer kann auf die Berechnung eines Dynamikmodells verzichten. Eine Recheneinheit des Lastschätzers kann besonders kostengünstig sein. Die Schlagsensoreinheit kann besonders kostengünstig sein. In einer weiteren Ausgestaltung der Erfindung wird vorgeschlagen, dass die Schlagsensoreinheit einen Lastbeobachter aufweist. Unter einem "Lastbeobachter" soll in diesem Zusammenhang insbesondere eine, dem Fachmann bekannte, regelungstechnische Einrichtung verstanden werden, die dazu vorgesehen ist, aus einer Drehzahl und einer Stromaufnahme der Antriebseinheit unter Zuhilfenahme eines berechneten Dynamikmodells der Antriebseinheit ein abgegebenes Antriebsmoment der Antriebseinheit zu schätzen. Der Lastbeobachter kann in einem Verlauf des geschätzten Antriebsmoments eine für einen Schlagbetrieb charakteristische Last erkennen. Insbesondere kann der Lastbeobachter Einflüsse des Schlagbetriebs auf das Antriebsmoment von weiteren Einflüssen, wie zum Beispiel einer durch ein drehendes Werkzeug bei der Bearbeitung eines Werkstücks entstehenden Last, unterschieden. Ein Schlagbetrieb kann zuverlässig erkannt werden. Das Drehzahlsignal und die Stromaufnahme können zur Regelung der Antriebseinheit bereits zur Verfügung stehen. Die Schlagsensoreinheit kann das bestehende Drehzahlsignal und die Stromaufnahme nutzen. Zusätzliche Sensoren können vermieden werden. Die Schlagsensoreinheit kann kostengünstig sein. Die Schlagsensoreinheit kann dynamische Lasten der Antriebseinheit besonders gut berücksichtigen. Die Schlagsensoreinheit kann besonders zuverlässig sein.

In einer weiteren Ausgestaltung der Erfindung wird vorgeschlagen, dass die Schlagsensoreinheit zumindest einen Sensor für eine mechanische Messgröße aufweist, der dazu vorgesehen ist, den Schlagbetrieb zu detektieren. Unter einer "mechanischen" Messgröße soll in diesem Zusammenhang eine Messgröße verstanden werden, die eine Bewegung und/oder eine Kraft repräsentiert, wie insbesondere eine Kraft, eine Beschleunigung, eine Geschwindigkeit, einen Druck, einen Schalldruck oder eine Verformung und/oder insbesondere eine von einer rein elektrischen Größe abweichende Messgröße. Insbesondere kann die Schlagsensoreinheit einen Beschleunigungssensor aufweisen. Durch die Schlagimpulse hervorgerufene Beschleunigungen können besonders gut messbar sein. Bevorzugt kann der Beschleunigungssensor nahe der Schlagentstehung angeordnet sein, wie zum Beispiel an einem Führungsrohr, einem Werkzeughalter oder einem Getriebegehäuse. Besonders bevorzugt ist der Beschleunigungssensor dazu vorgesehen, insbesondere Beschleunigungen in Schlagrichtung zu messen. Eine zuverlässige Detektion des Schlagbetriebs kann möglich sein. Weiter wird vorgeschlagen, dass die Schlagsensoreinheit einen Kraftsensor, wie einen Piezosensor, oder einen Verformungssensor, wie einen Dehnmesssensor (DMS), enthält. Ein Einfluss einer durch den Schlagimpuls hervorgerufenen Kraft und/oder Verformung kann besonders gut messbar sein. Bevorzugt kann der Kraftsensor oder der Verformungssensor an einem Bauteil und/oder zwischen Bauteilen im Kraftfluss des Schlagimpulses angeordnet sein, wie zum Beispiel in oder an einem Werkzeug, einem Werkzeughalter, einem Schlagbolzen, einem Führungsrohr und/oder einem Schläger. Besonders bevorzugt ist der Kraftsensor oder der Verformungssensor dazu vorgesehen, insbesondere Kräfte und/oder Verformungen in Schlagrichtung zu messen. Eine zuverlässige Detektion des Schlagbetriebs kann möglich sein. Weiter wird vorgeschlagen, dass die Schlagsensoreinheit einen Drucksensor enthält. Bevorzugt kann der Drucksensor dazu vorgesehen sein, einen Druckverlauf im Raum zwischen dem Schläger und dem Kolben zu messen. Der Drucksensor kann besonders zuverlässig den den Schläger in Schlagrichtung beschleunigenden Druck messen. Ein Schlagbetrieb kann besonders zuverlässig erkannt werden. Ein kurzzeitiger Druckanstieg durch eine Verlagerung einer Steuer- und/oder Leerlaufhülse bei einem Umschalten vom Leerlaufmodus in den Schlagmodus kann erkannt werden. Die Schlagsensoreinheit kann neben dem Schlagbetrieb einen Betriebsmoduswechsel vom Leerlaufmodus in den Schlagmodus erkennen.

Weiter wird vorgeschlagen, dass die Schlagsensoreinheit zumindest eine Filtereinheit aufweist, die dazu vorgesehen ist, einen Signalanteil aus einem Sensorsignal des Sensors zu isolieren. Unter einer "Filtereinheit" soll in diesem Zusammenhang insbesondere eine Einheit verstanden werden, die dazu vorgesehen ist, das Sensorsignal in seinem Signalspektrum zu verändern. Die Filtereinheit kann Teil der Signalverarbeitungseinheit der Sensoreinheit sein. Die Filtereinheit kann zumindest teilweise eine physikalische Einheit sein, die durch Bauteile gebildet wird. Bevorzugt kann die Filtereinheit zumindest teilweise von einem Rechenalgorithmus gebildet werden, der von einer Recheneinheit der Sensoreinheit zu einer Filterung des Sensorsignals verarbeitet wird. Insbesondere kann die Filtereinheit dazu vorgesehen sein, Frequenzbänder zu verstärken und/oder abzuschwächen und/oder unerwünschte Signalanteile abzuschwächen und/oder erwünschte Signalanteile zu verstärken. Unter "erwünschten" Signalanteilen sollen in diesem Zusammenhang insbesondere Anteile des Sensorsignals verstanden werden, die dazu geeignet sind, die Schlagkenngröße zu detektieren, wie insbesondere Signalanteile, die zumindest im Wesentlichen direkt oder indirekt durch den Schlagimpuls verursacht werden. Unter "unerwünschten" Signalanteilen sollen in diesem Zusammenhang insbesondere Signalanteile verstanden werden, die zumindest nur eingeschränkt geeignet sind, die Schlagkenngröße zu detektieren, wie Signalanteile, die zumindest im Wesentlichen durch Vibrationen einer Antriebseinheit oder eines Getriebes der Handwerkzeugmaschine oder durch Bearbeitungsvorgänge am Bearbeitungswerkzeug verursacht werden. Unter "zumindest im Wesentlichen" soll insbesondere überwiegend verstanden werden, zu mehr als 50%, bevorzugt zu mehr als 75%, besonders bevorzugt zu mehr als 90%. Die Sensoreinheit kann die Schlagkenngrö-ße besonders zuverlässig detektieren. Störungen des Sensorsignals können verringert werden.

Vorteilhaft weist die Steuereinheit einen Lernmodus zur Ermittlung des Betriebsparameters auf. Insbesondere kann die Steuereinheit einen Lernmodus zum Lernen zumindest eines Grenzparameters aufweisen, der den Bereich des stabilen Schlagbetriebs vom kritischen Schlagbetrieb abgrenzt. Weiter kann die Steuereinheit dazu vorgesehen sein, einen Maximalparameter zu lernen, der bei einem Schlagbetrieb nicht überschritten werden darf, wie die Maximaldrehzahl. Bevorzugt ist die Steuereinheit dazu vorgesehen, im Lernmodus einen vorteilhafte Startparameter und/oder eine vorteilhafte Startdrehzahl festzulegen. Die Steuereinheit kann den Betriebsparameter vorteilhaft ermitteln. Der Betriebsparameter, insbesondere der Startparameter, kann abhängig von Umwelteinflüssen optimal festgelegt werden. Insbesondere kann ein zulässiger Startparameter und/oder ein Grenzparameter abhängig von einem Umgebungsdruck und/oder einer Temperatur sein. Eine Veränderung des Schlagwerks während seiner Lebensdauer kann berücksichtigt werden. Insbesondere kann der Betriebsparameter einem Schlagwerkverschleiß, einer Schlagwerkschmierung und weiteren Einflüssen angepasst werden. Der Lernmodus kann bei einer ersten Inbetriebnahme, bei jeder Inbetriebnahme, in festgesetzten Zeitabständen, bei jedem Wechsel vom Leerlaufmodus in den Schlagmodus oder durch eine Benutzereinstellung erfolgen. Das Schlagwerk kann bei verschiedenen Umgebungsbedingungen und unter verschiedenen Einflussfaktoren optimale Betriebsparameter aufweisen. Ein Festlegen des Betriebsparameters durch einen Hersteller des Schlagwerks und/oder den Benutzer kann entfallen.

Es wird vorgeschlagen, dass die Steuereinheit im Lernmodus bei einem erfolgreichen Schlagwerkstart den Betriebsparameter abspeichert. Die Steuereinheit kann beim Wechsel vom Leerlaufmodus in den Betriebsmodus eine hohe kritische Arbeitsdrehzahl wählen. Anschließend kann die Steuereinheit die Drehzahl so lange absenken, bis der Schlagbetrieb beginnt. Diese Drehzahl kann als Grenzdrehzahl und/oder Startdrehzahl abgespeichert werden. Die Steuereinheit kann als Startdrehzahl eine um einen Sicherheitsfaktor verringerte Drehzahl abspeichern, zum Beispiel das 0.5 - 0.8-fache der ermittelten Grenzdrehzahl. Alternativ kann die Steuereinheit als Startdrehzahl eine um einen festen Wert verringerte Grenzdrehzahl abspeichern. In einem weiteren Verfahren kann die Steuereinheit die Grenzdrehzahl und/oder maximale Startdrehzahl lernen, indem sie ausgehend von einer bekannten sicheren Startdrehzahl bei jedem Schlagwerkstart die Startdrehzahl um einen festgesetzten Schritt oder Faktor erhöht. War der Schlagwerkstart erfolgreich, wird die Drehzahl als zulässige Startdrehzahl abgespeichert. Bleibt der Schlagwerkstart bei einem Wechsel vom Leerlaufmodus in den Schlagmodus während einer festgesetzten Zeitspanne aus, wird der eingestellte Drehzahlwert verworfen und für zukünftige Betriebswechsel ein vorhergehender, niedrigerer Drehzahlwert als Startdrehzahl genutzt. Weiter kann die Steuereinheit bei Überschreitung einer maximal zulässigen Vibration und/oder einem Abbruch des Schlagbetriebs eine Maximaldrehzahl festlegen, die in Folge nicht überschritten werden soll. Eine einfache und zuverlässige Ermittlung des Betriebsparameters kann möglich sein.

Weiter wird vorgeschlagen, dass die Steuereinheit zumindest einen Verzögerungsparameter aufweist, der dazu vorgesehen ist, eine Zeitdauer für einen Wechsel zwischen zwei Werten des Betriebsparameters zu beeinflussen. Der Wechsel von einem Leerlaufwert und/oder Arbeitswert auf einen Startwert und/oder vom Startwert zum Arbeitswert kann durch einen Sollwertsprung erfolgen. Bevorzugt kann der Wechsel linear erfolgen und/oder einen stetigen Verlauf aufweisen. Eine Stromaufnahme der Antriebseinheit kann begrenzt werden. Beschleunigungen, Antriebskräfte und/oder Vibrationen können reduziert werden. Die Zeitdauer und/oder der Verlauf des Wechsels zwischen den zwei Werten des Betriebsparameters kann bevorzugt abhängig von einer Einstellung eines Wahlschalters und/oder einem Bearbeitungsfall und/oder einer Werkstoffart und/oder einem Werkzeugtyp und/oder Umgebungsbedingungen festgelegt werden. Insbesondere kann bei einem Schlagbohren ein langsamer Wechsel zwischen den Werten des Betriebsparameters sinnvoll sein, z.B. kann der Wechsel zumindest 1 - 2 Sekunden dauern. Beim Meißeln kann eine kurze Zeit für einen Wechsel zwischen den Werten des Betriebsparameters sinnvoll sein, z.B. 0.1 - 0.5 Sekunden. Bevorzugt kann die Zeitdauer und/oder der Verlauf des Wechsels zwischen zwei Werten des Betriebsparameters abhängig von einer Arbeitslage sein; insbesondere kann die Zeitdauer verkürzt werden, wenn die Arbeitslage zumindest im Wesentlichen nach unten gerichtet ist und verlängert werden, wenn die Arbeitslage zumindest im Wesentlichen nach oben gerichtet ist. Unter einer "Arbeitslage" soll in diesem Zusammenhang insbesondere eine Ausrichtung des Schlagwerks bezüglich der Schwerkraft verstanden werden. Unter "nach oben" soll in diesem Zusammenhang insbesondere eine Richtung, die der Schwerkraft entgegengesetzt ist, verstanden werden, unter "nach unten" zumindest im Wesentlichen die Richtung der Schwerkraft. Der Verzögerungsparameter kann dazu vorgesehen sein, zumindest eine Steigung und/oder zumindest einen Kurvenverlauf der den Wechsel zwischen den Werten des Betriebsparameters definierenden Funktion festzulegen. Vorteilhaft kann die Zeitdauer für ein Anlaufen des Schlagwerks festgelegt werden. Unter einem "Anlaufen" soll in diesem Zusammenhang insbesondere ein Start des Schlagmodus aus einem Stillstand der Antriebseinheit verstanden werden. Ein Anlaufen des Schlagwerks kann vom Stillstand direkt zu einem kritischen Arbeitswert, insbesondere einer kritischen Arbeitsdrehzahl, erfolgen. Steigt die Drehzahl langsam an, kann das Schlagwerk vor Erreichen der Grenzdrehzahl starten. Steigt die Drehzahl schnell an, kann ein Schlagwerkstart vor dem Erreichen der Grenzdrehzahl ausbleiben. Die Drehzahl muss zu einem Schlagwerkstart vorübergehend auf die Startdrehzahl eingestellt werden. Bevorzugt weist die Steuereinheit einen Lernmodus auf, der dazu vorgesehen ist, eine maximale Anstieggeschwindigkeit für einen Schlagwerkstart mit einem kritischen Arbeitsparameter zu lernen. Die Steuereinheit kann die Anstieggeschwindigkeit des Wechsels vom Stillstand zur Arbeitsdrehzahl bei aufeinander folgenden Wechseln in den Schlagbetrieb aus dem Stillstand schrittweise erhöhen. Bleibt der Schlagwerkstart aus, kann die maximale Anstieggeschwindigkeit überschritten sein. Die Steuereinheit kann eine reduzierte Anstieggeschwindigkeit als maximale Anstieggeschwindigkeit für einen Schlagwerkstart festlegen. Ebenso ist es möglich, dass die Steuereinheit im Lernmodus für einen Schlagwerkstart aus dem Stillstand zunächst eine hohe Anstieggeschwindigkeit einstellt und bei einem erfolglosen Schlagwerkstart bei erneuten Schlagwerkstarts aus dem Stillstand diese schrittweise reduziert, bis ein sicherer Schlagwerkstart erreicht wird. Bei einem erfolglosen Schlagwerkstart kann die Steuereinheit durch einen vorübergehenden Wechsel auf die Startdrehzahl das Schlagwerk starten. Ein optimaler Betrieb des Schlagwerks kann sichergestellt werden. Parameter können automatisch festgelegt werden.

Weiter wird eine Betriebsbedingungssensoreinheit vorgeschlagen. Eine Betriebsbedingungssensoreinheit kann insbesondere dazu vorgesehen sein, einen das Schlagwerk umgebenden Luftdruck zu messen. Ein Temperatursensor der Betriebsbedingungssensoreinheit kann insbesondere dazu vorgesehen sein, eine das Schlagwerk umgebende Lufttemperatur und/oder eine Temperatur des Schlagwerks, insbesondere eines Schlagwerkgehäuses und/oder Führungsrohrs, zu messen. Es können weitere Einflussfaktoren für den Betrieb der Schlagwerkvorrichtung zur Verfügung stehen. Eine Robustheitsreserve des Betriebsparameters kann gering ausfallen. Unter einer "Robustheitsreserve" soll in diesem Zusammenhang insbesondere eine Einstellung des Betriebsparameters verstanden werden, die dazu vorgesehen ist, einen zuverlässigen Betrieb bei abweichenden Betriebsbedingungen zu gewährleisten, was bei gegebenen Betriebsbedingungen eine verminderte Leistungsfähigkeit zur Folge haben kann.

Es wird vorgeschlagen, dass die Steuereinheit dazu vorgesehen ist, eine Messgröße der Betriebsbedingungssensoreinheit zu verarbeiten. Insbesondere kann die Steuereinheit den Grenzparameter und/oder den Startparameter und/oder den Maximalparameter abhängig von zumindest einer Messgröße der Betriebsbedingungssensoreinheit festzulegen. Der Grenzparameter und/oder Startparameter und/oder Maximalparameter des Schlagwerks kann abhängig vom Umgebungsdruck und/oder der Temperatur sein. Der Grenzparameter und/oder der Startparameter und/oder der Maximalparameter kann abhängig von Umgebungsdruck und/oder Temperatur in einer Speichereinheit abgespeichert sein. Eine Recheneinheit kann über Funktionen zur Berechnung zulässiger Grenzparameter und/oder Startparameter und/oder Maximalparameter verfügen. Die Steuereinheit kann die Parameter anhand der Messgrößen festlegen. Die abgespeicherten Parameter und/oder die Funktionen zur Berechnung können so gewählt sein, dass die ermittelten Parameter eine Sicherheitsmarge aufweisen. Ein gesteuerter Betrieb des Schlagwerkstarts und/oder ein gesteuertes Einstellen des Betriebsparameters kann möglich sein. Unter einem "gesteuerten Betrieb" und/oder einem "gesteuerten Einstellen" soll in diesem Zusammenhang insbesondere verstanden werden, dass ein Ermitteln des erfolgreichen Schlagbetriebs entfällt. Ein Schlagsensor kann entfallen. Die Steuereinheit kann bei einem Wechsel eines Betriebsmodus die abhängig von den Messgrößen festgelegten Parameter nutzen. Es können Bauteile und Kosten gespart werden. Auf ein Erkennen des Schlagbetriebs kann verzichtet werden. Fehlfunktionen durch ein fehlerhaftes Erkennen des Schlagbetriebs können vermieden werden. Eine Optimierung des Betriebsparameters abhängig von Umgebungsparametern ist möglich. Insbesondere kann ein Schlagwerkstart in großen Höhen und/oder bei reduziertem Umgebungsdruck sichergestellt werden.

Weiter wird eine Handwerkzeugmaschine, insbesondere ein Bohr- und/oder Schlaghammer, mit einer erfindungsgemäßen Schlagwerkeinheit vorgeschlagen. Die Handwerkzeugmaschine kann die genannten Vorteile aufweisen.

Zeichnung

Weitere Vorteile ergeben sich aus der folgenden Zeichnungsbeschreibung. In der Zeichnung sind vier Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

Fig. 1     eine schematische Darstellung eines Bohr- und Schlaghammers mit einer erfindungsgemäßen Schlagwerkeinheit in einem ersten Ausführungsbeispiel in einem Leerlaufmodus,

Fig. 2     eine schematische Darstellung des Bohr- und Schlaghammers in einem Schlagmodus,

Fig. 3     eine schematische Darstellung eines simulierten AmplitudenFrequenzgangs eines nichtlinearen schwingfähigen Systems,

Fig. 4     eine schematische Darstellung eines weiteren simulierten AmplitudenFrequenzgangs des nichtlinearen schwingfähigen Systems,

Fig. 5     eine schematische Darstellung der simulierten Schlagenergie der Schlagwerkeinheit bei einem Schlagwerkstart bei fallender und bei steigender Schlagfrequenz,

Fig. 6     eine schematische Darstellung der simulierten Schlagenergie der Schlagwerkeinheit bei einem Schlagwerkstart bei unterschiedlichen Umgebungsdruckverhältnissen,

Fig. 7     eine schematische Darstellung einer möglichen Festlegung eines Startwerts, eines Grenzwerts, eines Arbeitswerts und eines Maximalwerts,

Fig. 8     eine schematische Darstellung einer Filtereinheit einer Schlagsensoreinheit zur Isolation eines Signalanteils,

Fig. 9     eine Darstellung eines Blockdiagramms der Schlagwerkeinheit,

Fig. 10     eine Darstellung eines Ablaufdiagramms der Steuereinheit der Schlagwerkeinheit bei einem Wechsel zwischen einem Leerlaufmodus und einem Schlagmodus,

Fig. 11     eine Darstellung von Signalen der Schlagwerkeinheit bei einem Wechsel zwischen dem Leerlaufmodus und dem Schlagmodus,

Fig. 12     eine Darstellung möglicher Sollwert-Verläufe der Schlagfrequenz beim Wechsel von einem Leerlaufwert zum Startwert,

Fig. 13     eine Darstellung möglicher Sollwert-Verläufe der Schlagfrequenz beim Wechsel vom Startwert zum Arbeitswert,

Fig. 14     eine schematische Darstellung eines Bohr- und Schlaghammers mit einer erfindungsgemäßen Schlagwerkeinheit mit einer Betriebsbedingungssensoreinheit in einem zweiten Ausführungsbeispiel,

Fig. 15     eine schematische Darstellung eines Kennfelds zur Ermittlung zumindest eines Betriebsparameters,

Fig. 16     eine schematische Darstellung einer Entlüftungseinheit eines Schlagwerks eines Bohr- und Schlaghammers mit einer Schlagwerkeinheit,

Fig. 17     eine weitere schematische Darstellung der Entlüftungseinheit und

Fig. 18     eine schematische Darstellung eines Bohr- und Schlaghammers mit einer Schlagwerkeinheit mit einer Schlagsensoreinheit in einem weiteren Ausführungsbeispiel.

Beschreibung der Ausführungsbeispiele

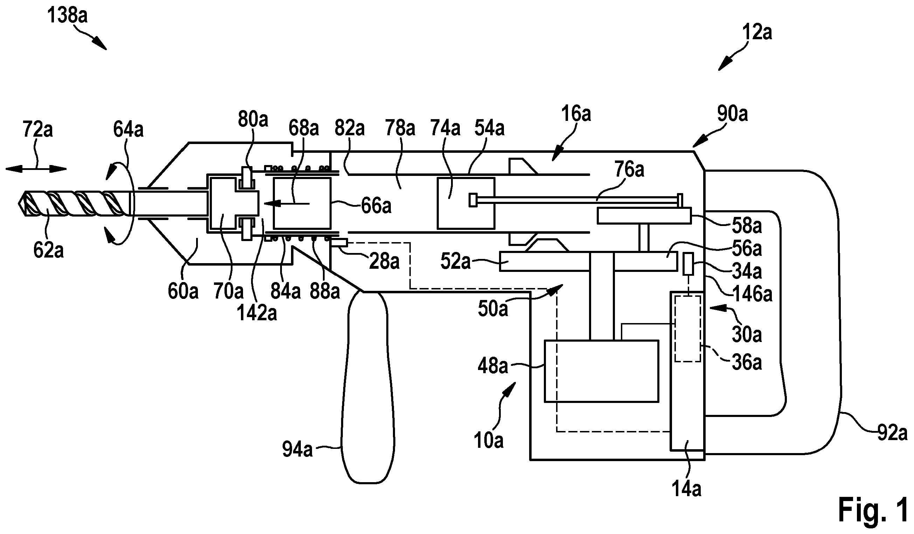

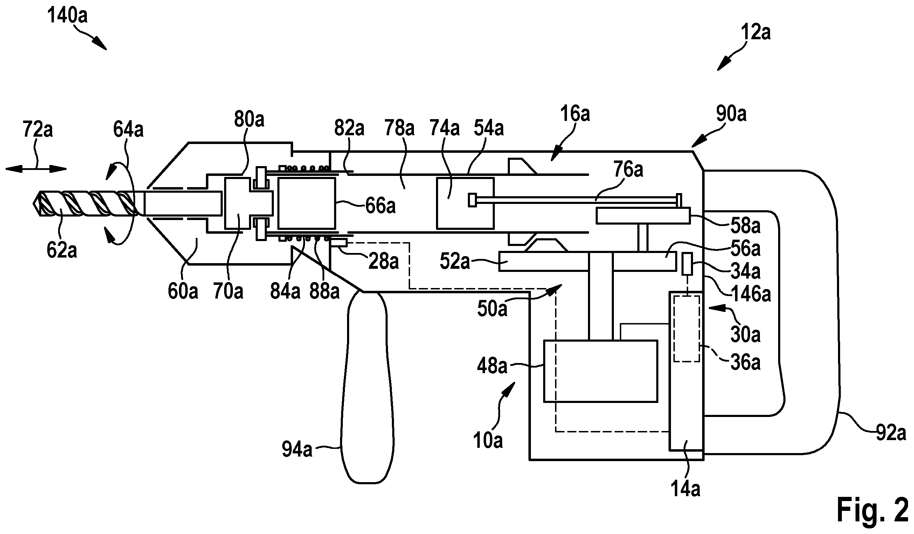

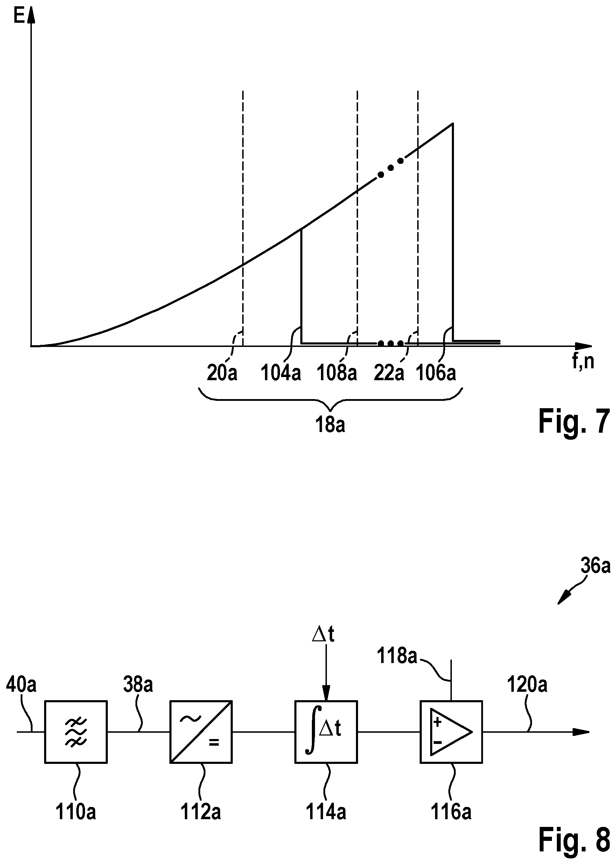

Figur 1 und Figur 2 zeigen einen Bohr- und Schlaghammer 12a mit einer Schlagwerkeinheit 10a und mit einer Steuereinheit 14a, die dazu vorgesehen ist, ein pneumatisches Schlagwerk 16a zu steuern und zu regeln. Die Schlagwerkeinheit 10a enthält einen Motor 48a mit einer Getriebeeinheit 50a, die über ein erstes Zahnrad 52a ein Hammerrohr 54a drehend antreibt und über ein zweites Zahnrad 56a ein Exzentergetriebe 58a antreibt. Das Hammerrohr 54a ist mit einem Werkzeughalter 60a drehfest verbunden, in dem ein Werkzeug 62a eingespannt werden kann. Werkzeughalter 60a und Werkzeug 62a können für einen Bohrbetrieb über das Hammerrohr 54a mit einer rotierenden Arbeitsbewegung 64a angetrieben werden. Wird ein Schläger 66a in einem Schlagbetrieb in einer Schlagrichtung 68a in Richtung des Werkzeughalters 60a beschleunigt, übt er bei einem Aufprall auf einen zwischen Schläger 66a und Werkzeug 62a angeordneten Schlagbolzen 70a einen Schlagimpuls aus, der vom Schlagbolzen 70a an das Werkzeug 62a weitergegeben wird. Das Werkzeug 62a übt durch den Schlagimpuls eine schlagende Arbeitsbewegung 72a aus. Ein Kolben 74a ist ebenfalls beweglich im Hammerrohr 54a auf der der Schlagrichtung 68a abgewandten Seite des Schlägers 66a gelagert. Der Kolben 74a wird über einen Pleuel 76a vom mit einer Schlagwerkdrehzahl angetriebenen Exzentergetriebe 58a periodisch im Hammerrohr 54a in Schlagrichtung 68a und wieder zurück bewegt. Der Kolben 74a verdichtet ein zwischen Kolben 74a und Schläger 66a im Hammerrohr 54a eingeschlossenes Luftpolster 78a. Bei einer Bewegung des Kolbens 74a in Schlagrichtung 68a wird der Schläger 66a in Schlagrichtung 68a beschleunigt. Abhängig von in der Folge beschriebenen Betriebsparametern 18a (Figur 7) kann ein Schlagbetrieb einsetzen. Durch einen Rückprall am Schlagbolzen 70a und/oder einen durch die Rückbewegung des Kolbens 74a entgegen der Schlagrichtung 68a zwischen dem Kolben 74a und dem Schläger 66a entstehenden Unterdruck und/oder durch einen Gegendruck im Raum zwischen Schläger 66a und Schlagbolzen 70a kann der Schläger 66a ebenfalls abhängig von Betriebsparametern 18a, wie Schlagfrequenz, Temperatur und Umgebungsdruck, wieder entgegen der Schlagrichtung 68a zurückbewegt werden und anschließend für einen nächsten Schlagimpuls erneut in Schlagrichtung 68a beschleunigt werden. In einem Bereich zwischen Schläger 66a und Schlagbolzen 70a sind im Hammerrohr 54a Entlüftungsöffnungen 80a angeordnet, so dass die zwischen Schläger 66a und Schlagbolzen 70a in einem Schlagraum 142a eingeschlossene Luft entweichen kann. In einem Bereich zwischen Schläger 66a und Kolben 74a sind im Hammerrohr 54a Leerlauföffnungen 82a angeordnet. Der Werkzeughalter 60a ist in Schlagrichtung 68a verschiebbar gelagert und stützt sich an einer Steuerhülse 84a ab. Ein Federelement 88a übt auf die Steuerhülse 84a eine Kraft in Schlagrichtung 68a aus. In einem Schlagmodus 140a (Figur 2), in dem das Werkzeug 62a von einem Benutzer gegen ein Werkstück gedrückt wird, verschiebt der Werkzeughalter 60a gegen die Kraft des Federelements 88a die Steuerhülse 84a so, dass sie die Leerlauföffnungen 82a verdeckt. Wird das Werkzeug 62a vom Werkstück abgesetzt, werden der Werkzeughalter 60a und die Steuerhülse 84a durch das Federelement 88a so in Schlagrichtung 68a in einen Leerlaufmodus 138a (Figur 1) verschoben, dass die Steuerhülse 84a die Leerlauföffnungen 82a freigibt. Ein Druck im Luftpolster 78a zwischen Kolben 74a und Schläger 66a kann durch die Leerlauföffnungen 82a entweichen. Der Schläger 66a wird im Leerlaufmodus 138a nicht oder nur wenig durch das Luftpolster 78a beschleunigt. Im Leerlaufbetrieb übt der Schläger 66a keine oder nur geringe Schlagimpulse auf den Schlagbolzen 70a aus. Der Bohr- und Schlaghammer 12a verfügt über ein Handwerkzeugmaschinengehäuse 90a mit einem Handgriff 92a und einem Zusatzhandgriff 94a, an denen er von einem Benutzer geführt wird.

Ein Einsetzen eines Schlagbetriebs beim Umschalten der Schlagwerkeinheit 10a vom Leerlaufmodus 138a in den Schlagmodus 140a durch Verschließen der Leerlauföffnungen 82a hängt von den Betriebsparametern 18a ab. Der Kolben 74a erfährt durch das zwischen Kolben 74a und Schläger 66a eingeschlossene Luftpolster 78a eine periodische Anregung mit einer Schlagfrequenz, die der Schlagwerkdrehzahl des Exzentergetriebes 58a entspricht.

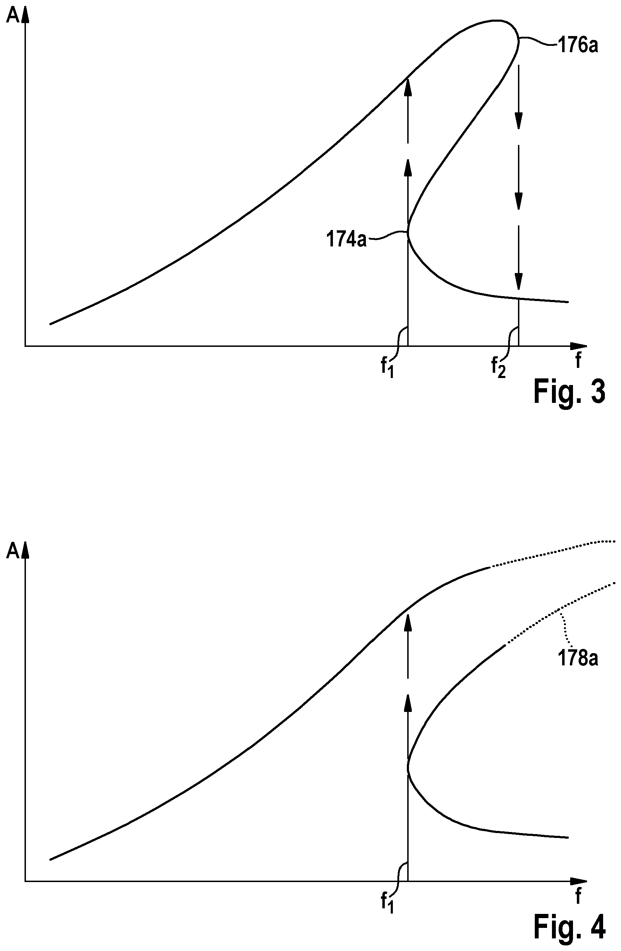

Das Schlagwerk 16a stellt ein nichtlineares schwingfähiges System dar. Figur 3 zeigt zum Verständnis eine schematische Darstellung eines simulierten Amplituden-Frequenzgangs eines allgemeinen nichtlinearen schwingfähigen Systems in Abhängigkeit von einer Frequenz f. Die Amplitude A entspricht dabei der Amplitude eines hier nicht näher dargestellten, dem Schläger 66a entsprechenden schwingenden Körpers des Systems bei einer externen Anregung, wie sie beim Schlagwerk 16a durch den Kolben 74a erfolgt. Der Amplitudenfrequenzgang ist nichtlinear, bei hohen Frequenzen weist der Amplitudenfrequenzgang mehrere Lösungen auf. Welche Amplitude sich in diesem Bereich einstellt, hängt unter anderem davon ab, in welcher Richtung die Frequenz f verändert wird. Wird ausgehend von einer höheren Frequenz f eine Minimalfrequenz $f_1$ des Bereichs des Amplitudenfrequenzgangs mit mehreren Lösungen unterschritten, springt die Amplitude A von einem Scheitelpunkt 174a mit unendlicher Steigung auf eine zulässige Lösung des Amplitudenfrequenzgangs mit einem höheren Niveau. Wird von einer niedrigeren Frequenz f her eine Maximalfrequenz $f_2$ des Bereichs des Amplitudenfrequenzgangs mit mehreren Lösungen überschritten, springt die Amplitude A von einem Scheitelpunkt 176a mit unendlicher Steigung auf eine zulässige Lösung des Amplitudenfrequenzgangs mit einem tieferen Niveau. In der Figur 3 ist dieses Verhalten durch Pfeile angedeutet. In Figur 4 ist ein weiterer simulierter Amplituden-Frequenzgang des nichtlinearen schwingfähigen Systems bei abweichenden Bedingungen dargestellt. Der Amplitudenfrequenzgang weist anstelle einer Maximalfrequenz $f_2$ eine Lücke 178a auf. Dieser Fall tritt zum Beispiel auf, wenn die Maximalfrequenz $f_2$ höher ist als eine mögliche Anregungsfrequenz, mit der das schwingfähige System angeregt werden kann. Im Fall des Schlagwerks 16a kann die Anregungsfrequenz zum Beispiel durch eine Maximaldrehzahl des Exzentergetriebes 58a begrenzt sein.

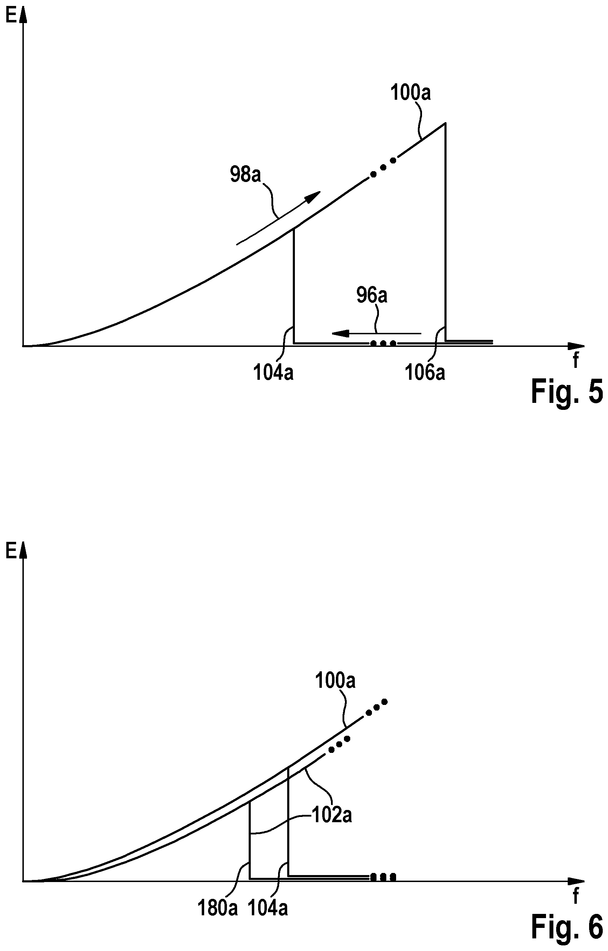

Die Auswirkung des nichtlinearen Amplitudenfrequenzgangs auf den Schlagbetrieb des Schlagwerks 16a ist in Figur 5 dargestellt. Figur 5 zeigt eine simulierte Schlagenergie E des Schlagwerks 16a bei einem Schlagwerkstart bei fallender Schlagfrequenz 96a und bei steigender Schlagfrequenz 98a. Wird der Schläger 66a mit einer steigenden Schlagwerkdrehzahl beziehungsweise Schlagfrequenz 98a angeregt, steigt mit steigender Schlagfrequenz 98a die Schlagenergie E. Wird der Schläger 66a ausgehend von einem Leerschlagbetrieb von einer hohen Schlagwerkdrehzahl aus mit einer fallenden Schlagwerkdrehzahl beziehungsweise Schlagfrequenz 96a angeregt, setzt der Schlagbetrieb erst bei einer bestimmten Schlagwerkdrehzahl ein. Diese Schlagwerkdrehzahl stellt einen Grenzwert 104a dar. Oberhalb dieser Schlagfrequenz beginnt sich der Schläger 66a bei fallender Schlagfrequenz 96a nicht, oder nur mit einer geringen Amplitude und/oder Geschwindigkeit, zu bewegen, auch wenn bei einer Umschaltung von dem Leerlaufmodus 138a in den Schlagmodus 140a die Leerlauföffnungen 82a verschlossen werden. Es werden vom Schläger 66a auf den Schlagbolzen 70a keine oder nur sehr geringe Schlagimpulse ausgeübt. Oberhalb eines Maximalwerts 106a fällt die Schlagenergie E steil ab. Der Schläger 66a führt in diesem Fall keine Bewegung in Schlagrichtung 68a oder Bewegungen mit einer geringen Amplitude in Schlagrichtung 68a aus, so dass keine oder nur geringe Schlagimpulse mit einer geringen Schlagenergie E an den Schlagbolzen 70a abgegeben werden. Abhängig von Umgebungsbedingungen und der Auslegung des Schlagwerks 16a liegt der Grenzwert 104a in einem Bereich von 20 - 70 Hz. Der Maximalwert 106a ist größer als der Grenzwert 104a und liegt abhängig von Umgebungsbedingungen und der Auslegung des Schlagwerks 16a in einem Bereich von 40 - 400 Hz. Die Schlagenergie E erreicht abhängig von Umgebungsbedingungen und der Auslegung des Schlagwerks 16a beim Grenzwert 104a 1 - 200 Joule, beim Maximalwert 106a 2 - 400 Joule.

Figur 6 zeigt die simulierten Schlagenergien E des Schlagwerks 16a bei einem Schlagwerkstart bei fallender und bei steigender Schlagfrequenz bei unterschiedlichen Umgebungsbedingungen, in diesem Beispiel zeigt die Kurve 100a die Schlagenergie E bei einem ersten Umgebungsdruck und die Kurve 102a die Schlagenergie E bei einem zweiten, gegenüber dem ersten Umgebungsdruck reduzierten, Umgebungsdruck. Ein Grenzwert 180a der Schlagfrequenz beim zweiten Umgebungsdruck tritt bei einer geringeren Schlagfrequenz auf als der Grenzwert 104a der Schlagfrequenz beim ersten Umgebungsdruck. Ist der zweite Umgebungsdruck um 10% niedriger als der erste Umgebungsdruck, ist der Grenzwert 180a der Schlagfrequenz abhängig von weiteren Einflussfaktoren um 1 - 25% niedriger als beim ersten Umgebungsdruck. Eine Temperatur des Schlagwerks 16a, insbesondere des Hammerrohrs 54a, hat ebenfalls einen Einfluss auf den Grenzwert 104a der Schlagfrequenz. Bei niedrigerer Umgebungstemperatur erhöht sich eine Reibung des Schlägers 66a im Hammerrohr 54a, insbesondere durch eine steigende Viskosität von Schmiermitteln. Sinkt die Temperatur des Hammerrohrs 54a um 10K, reduziert sich der Grenzwert 104a der Schlagfrequenz abhängig von weiteren Einflussfaktoren um 1 - 30%. Der Grenzwert 104a der Schlagfrequenz kann sich auch durch Einflüsse des Werkzeugs 62a um +/- 20% ändern. Das Werkzeug 62a kann einen Einfluss auf einen Rückprall des Schlägers 66a vom Schlagbolzen 70a haben und so den Grenzwert 104a der Schlagfrequenz beeinflussen.

Figur 7 zeigt eine schematische Darstellung einer möglichen Festlegung von Betriebsparametern 18a einer erfindungsgemäßen Regelungsstrategie, insbesondere eines Startwerts 20a, des Grenzwerts 104a, eines Arbeitswerts 22a und des Maximalwerts 106a. Der Startwert 20a wird bevorzugt bei einer Schlagwerkdrehzahl n gewählt, bei der der Amplitudenfrequenzgang eine eindeutige Lösung aufweist. Der Startwert 20a ist kleiner oder gleich dem Grenzwert 104a. Ein sicherer Schlagwerkstart kann gewährleistet werden unabhängig davon, aus welcher Richtung der Startwert 20a angefahren wird. Der Grenzwert 104a stellt den Übergang zu einem mehrdeutigen Amplitudenfrequenzgang und den maximalen Startwert 20a dar. Der Startwert 20a wird bevorzugt in einem Abstand zum Grenzwert 104a gewählt, zum Beispiel mit einer um 10% reduzierten Schlagwerkdrehzahl. Ist der Schlagbetrieb sichergestellt, kann das Schlagwerk 16a mit einer höheren Leistung bei einem überkritischen Arbeitswert 22a betrieben werden. Ein überkritischer Arbeitswert 22a zeichnet sich in diesem Fall durch einen mehrdeutigen Amplitudenfrequenzgang aus. Ein sicherer Schlagwerkstart ist bei dem überkritischen Arbeitswert 22a nicht gewährleistet. Oberhalb des Maximalwerts 106a fällt die Schlagenergie stark ab. Der Arbeitswert 22a wird daher niedriger als der Maximalwert 106a gewählt. Der Arbeitswert 22a kann von der Steuereinheit 14a festgelegt oder vom Benutzer eingestellt werden, zum Beispiel über einen hier nicht näher dargestellten Wahlschalter. Die Arbeitswerte 22a werden unter anderem abhängig von einem Bearbeitungsfall und/oder einer Werkstoffart und/oder einem Werkzeugtyp festgelegt. Verschiedenen einstellbaren Arbeitsgängen sind Arbeitswerte 22a zugeordnet. Ein Arbeitswert 22a oberhalb des Grenzwerts 104a ist ein überkritischer Arbeitswert 22a; ein Arbeitswert 22a unterhalb des Grenzwerts 104a und/oder unterhalb des Startwerts 20a ist ein stabiler Arbeitswert 22a. Neben dem Startwert 20a und dem Grenzwert 104a kann optional ein Leerlaufwert 108a festgelegt werden. Der Leerlaufwert 108a wird insbesondere im Leerlaufmodus 138a eingestellt. Der Leerlaufwert 108a wird vorteilhaft höher als der Startwert 20a eingestellt. Eine hier nicht dargestellte, vom Motor 48a angetriebene Lüftungseinheit kann mit einer höheren Drehzahl betrieben werden als bei einem Betrieb mit dem Startwert 20a. Die Kühlung des Schlagwerks 16a im Leerlaufmodus 138a verbessert sich. Ein Betriebsgeräusch des Bohr- und Schlaghammers 12a wird vom Benutzer als kraftvoller empfunden als beim Startwert 20a. Weiter wird der Leerlaufwert 108a vorteilhaft niedriger als der Arbeitswert 22a eingestellt. Lärmemissionen und/oder Vibrationen können gegenüber einem Betrieb mit dem Arbeitswert 22a reduziert werden. Beim Wechsel vom Leerlaufmodus 138a in den Schlagmodus 140a kann der Startwert 20a schneller als vom Arbeitswert 22a aus erreicht werden.

Die Steuereinheit 14a ist dazu vorgesehen, in einem Betriebszustand, in dem ein überkritischer Arbeitswert 22a eingestellt ist, zu einem Wechsel vom Leerlaufbetrieb in den Schlagbetrieb den Betriebsparameter 18a vorübergehend auf den Startwert 20a einzustellen. In einem Schlagbetrieb im Schlagmodus 140a stellt die Steuereinheit 14a anschließend den Betriebsparameter 18a auf den überkritischen Arbeitswert 22a ein. Der Benutzer kann die Schlagwerkeinheit 10a mit einem überkritischen Arbeitswert 22a sicher starten. Im Leerlaufmodus 138a wird der Leerlaufwert 108a eingestellt. Der Leerlaufwert 108a kann mit dem Arbeitswert 22a identisch, vorteilhaft kleiner als der Arbeitswert 22a und größer als der Startwert 20a sein.

In einem Betriebszustand, in dem ein stabiler Arbeitswert 22a zumindest unterhalb des Grenzwerts 104a oder unterhalb des Startwerts 20a gewählt ist, stellt die Steuereinheit 14a den Betriebsparameter 18a direkt auf den Arbeitswert 22a ein. Ist in einem Leerlaufbetrieb der Leerlaufwert 108a gewählt, der dem Arbeitswert 22a entspricht, kann ein Einstellen des Betriebsparameters 18a bei einem Wechsel zwischen Leerlaufbetrieb und Schlagbetrieb entfallen. Im den hier beschriebenen Fällen ist der Betriebsparameter 18a eine Schlagwerkdrehzahl. Die Steuereinheit 14a senkt beim Wechsel vom Leerlaufbetrieb in den Schlagbetrieb die Schlagwerkdrehzahl vorübergehend auf einen Startwert 20a ab, falls der Arbeitswert 22a der Schlagwerkdrehzahl höher als der Startwert 20a gewählt ist.

Ein Betriebswechselsensor 28a ist dazu vorgesehen, einen Wechsel eines Betriebsmodus zu signalisieren. Der Betriebswechselsensor 28a erfasst eine Position der Steuerhülse 84a. Um zwischen dem Leerlaufmodus 138a und dem Schlagmodus 140a zu wechseln, drückt der Benutzer das Werkzeug 62a gegen ein Werkstück, so dass die Steuerhülse 84a entgegen der Schlagrichtung 68a verschoben wird und die Leerlauföffnungen 82a verschließt. Der Betriebswechselsensor 28a signalisiert gleichzeitig der Steuereinheit 14a, dass ein Betriebswechsel stattgefunden hat und sich das Schlagwerk 16a nun im Schlagmodus 140a befindet. Der Betriebswechselsensor 28a ist als Induktiver Sensor ausgebildet und erkennt, wenn sich die Steuerhülse 84a in einer Position befindet, in der sie die Leerlauföffnungen 82a verdeckt und sich das Schlagwerk 16a im Schlagmodus 140a befindet. Alternativ kann der Betriebswechselsensor 28a auch so angebracht sein, dass er erkennt, wenn sich die Steuerhülse 84a in einer Position befindet in der sie die Leerlauföffnungen 82a freigibt und sich das Schlagwerk 16a im Leerlaufmodus 138a befindet

Eine Schlagsensoreinheit 30a ist dazu vorgesehen, den Schlagbetrieb zu signalisieren. Die Steuereinheit 14a kann mit Hilfe der Schlagsensoreinheit 30a erkennen, ob sich das Schlagwerk 16a im Schlagbetrieb oder im Leerlaufbetrieb befindet, insbesondere ob und zu welchem Zeitpunkt ein Schlagwerkstart stattgefunden hat. Die Schlagsensoreinheit 30a weist einen Sensor 34a für eine mechanische Messgröße auf, der dazu vorgesehen ist, den Schlagbetrieb zu detektieren. Der Sensor 34a ist als Beschleunigungssensor ausgebildet und misst Beschleunigungen 190a am Getriebegehäuse 146a. Eine Filtereinheit 36a der Schlagsensoreinheit 30a ist dazu vorgesehen, zu einer Aufbereitung eines Sensorsignals 40a einen Signalanteil 38a aus dem Sensorsignal 40a des Sensors 34a zu isolieren (Figur 8). Die Signalanteile 38a werden insbesondere durch die Schlagimpulse angeregt. Die Signalanteile 38a weisen typisch Frequenzen in einem Frequenzband von 1 - 5 kHz auf. Die Filtereinheit 36a weist einen Bandpassfilter 110a auf, der Frequenzen außerhalb des Bereichs von 1 - 5 kHz der durch die Schlagimpulse erzeugten Frequenzen ausfiltert. Das Sensorsignal 40a wird von einem Gleichrichter 112a gleichgerichtet und während eines Zeitfensters Δt von einem Integrator 114a integriert. Das Zeitfenster Δt wird der Schlagwerkdrehzahl und der Dauer eines Schlagereignisses angepasst. Ein Komparator 116a vergleicht das gefilterte, gleichgerichtete und integrierte Sensorsignal 40a mit einem Vergleichssignal 118a und gibt das Ergebnis des Vergleichs über einen Digitalausgang 120a an die Steuereinheit 14a weiter und signalisiert so den Schlagbetrieb oder Leerlaufbetrieb.

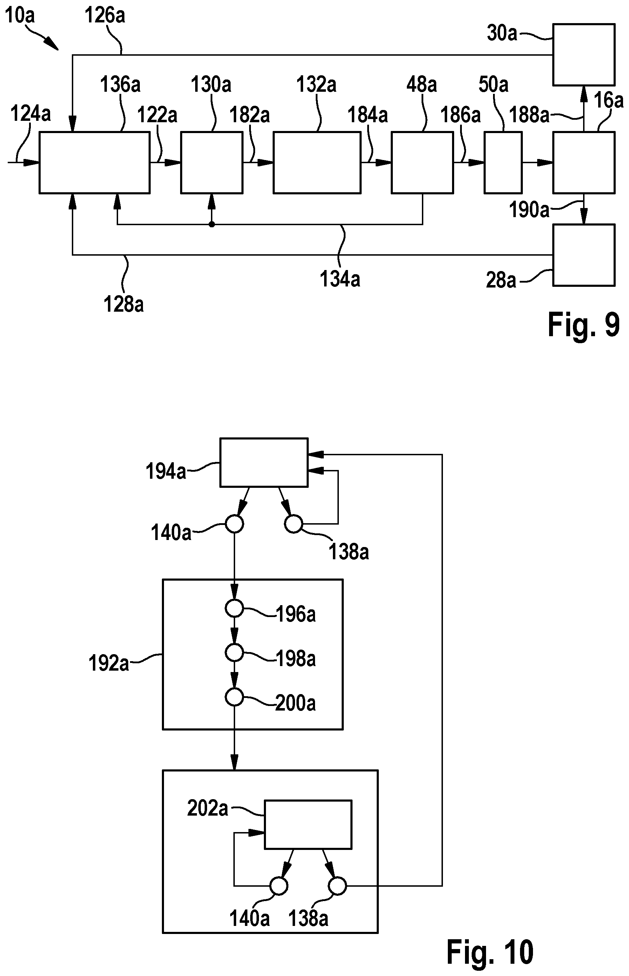

Figur 9 zeigt ein Blockdiagramm der Schlagwerkeinheit 10a. Eine Solldrehzahl 122a wird abhängig von einer Arbeitsgangwahl 124a, einem Betriebsmodussignal 126a der Schlagsensoreinheit 30a und einem Betriebsartensignal 128a des Betriebswechselsensors 28a durch einen Sollschlagzahlberechner 136a festgelegt. Der Sollschlagzahlberechner 136a ist Teil der Steuereinheit 14a. Abhängig von diesen Parametern und von der Übersetzung der Getriebeeinheit 50a wird die Solldrehzahl 122a des Motors 48a so eingestellt, dass die Schlagfrequenz und/oder eine Drehzahl des Exzentergetriebes 58a dem Arbeitswert 22a, dem Leerlaufwert 108a oder dem Startwert 20a entspricht. Die Solldrehzahl 122a wird einem Regler 130a weitergegeben. Eine Istdrehzahl 134a des Motors 48a wird als Regelgröße dem Sollschlagzahlberechner 136a und dem Regler 130a rückgeführt. Der Regler 130a berechnet aus einer Abweichung der Istdrehzahl 134a und der Solldrehzahl 122a einen Phasenanschnittwinkel 182a als Stellgröße für einen Spannungsregler 132a. Der Spannungsregler 132a gibt eine Spannung 184a an den Motor 48a weiter, der abhängig von der Spannung 184a und der Istdrehzahl 134a ein Antriebsmoment 186a erzeugt und mit diesem über die Getriebeeinheit 50a das Schlagwerk 16a antreibt. Die Schlagsensoreinheit 30a erkennt anhand der durch des Schlagwerk 16a verursachten Beschleunigung 190a die Betriebsart und gibt das Betriebsartensignal 128a an den Sollschlagzahlberechner 136a weiter; der Betriebswechselsensor 28a erkennt anhand einer Steuerhülsenposition 188a den Betriebsmodus und gibt das Betriebsmodussignal 126a an den Sollschlagzahlberechner 136a weiter.

Figur 10 zeigt ein Ablaufdiagramm des Betriebs der Schlagwerkeinheit 10a. In einem ersten Schritt 194a wird das Betriebsmodussignal 126a ausgewertet. Diese Auswertung wird fortlaufend wiederholt, solange der Leerlaufmodus 138a erkannt wird. Wird der Schlagmodus 140a erkannt, wird ein Betriebsartenwechsel 192a eingeleitet. In einem Schritt 196a wird der Startwert 20a eingestellt. In einem Schritt 198a wird gewartet, bis der Schlagbetrieb einsetzt. Dazu wird das Betriebsartensignal 128a ausgewertet. In einem weiteren Schritt 200a wird der Arbeitswert 22a eingestellt. Das Schlagwerk 16a befindet sich nun im Schlagbetrieb. In einem Schritt 202a wird nun wiederum das Betriebsmodussignal 126a ausgewertet. Diese Auswertung wird fortlaufend wiederholt, solange der Schlagmodus 140a erkannt wird. Wird der Leerlaufmodus 138a erkannt, findet ein Sprung zu Schritt 194a statt. Falls ein vom Arbeitswert 22a abweichender Leerlaufwert 108a definiert wurde, wird dieser beim Sprung zu Schritt 194a eingestellt. In einer Erweiterung des in Figur 10 gezeigten Ablaufs kann im Schritt 202a neben dem Betriebsmodussignal 126a das Betriebsartensignal 128a überwacht werden. Signalisiert das Betriebsartensignal 128a ein Ausbleiben des Schlagbetriebs, während das Betriebsmodussignal 126a weiter den Schlagmodus 140a signalisiert, findet ein Sprung zu Schritt 196a statt. Das Schlagwerk 10a kann so neu gestartet werden.

Die Steuereinheit 14a weist einen Lernmodus zur Ermittlung zumindest des Betriebsparameters 18a auf. Der Lernmodus kann manuell aktiviert werden, zum Beispiel wenn das Schlagwerk 16a bei veränderten Umgebungsbedingungen, wie bei einem veränderten Umgebungsdruck, eingesetzt wird. Die Steuereinheit 14a kann den Lernmodus zum Beispiel auch bei jeder Inbetriebnahme oder in festgelegten Zeitabständen ausführen. Zum Lernen des Startwerts 20a wird die Schlagwerkdrehzahl von einem festgelegten Maximalwert 106a kontinuierlich abgesenkt, bis die Schlagsensoreinheit 30a einen Schlagwerkstart signalisiert. Die Steuereinheit 14a speichert die Schlagwerkdrehzahl beim Schlagwerkstart, multipliziert mit einen Sicherheitsfaktor von zum Beispiel 0,8 als Startwert 20a ab. In einem alternativen Lernmodus kann die Steuereinheit 14a einen optimalen Startwert 20a ermitteln, in dem bei einem wiederholten Wechsel vom Leerlaufmodus 138a in den Schlagmodus 140a die Schlagwerkdrehzahl schrittweise erhöht wird. Bei einem erfolgreichen Schlagwerkstart wird die Schlagwerkdrehzahl als neuer Startwert 20a abgespeichert. Bleibt nach einer weiteren Erhöhung der Schlagwerkdrehzahl beim Wechsel vom Leerlaufmodus 138a in den Schlagmodus 140a der Schlagwerkstart aus, wird der Startwert 20a für weitere Wechsel vom Leerlaufmodus 138a in den Schlagmodus 140a auf den letzten erfolgreichen Startwert 20a festgelegt.

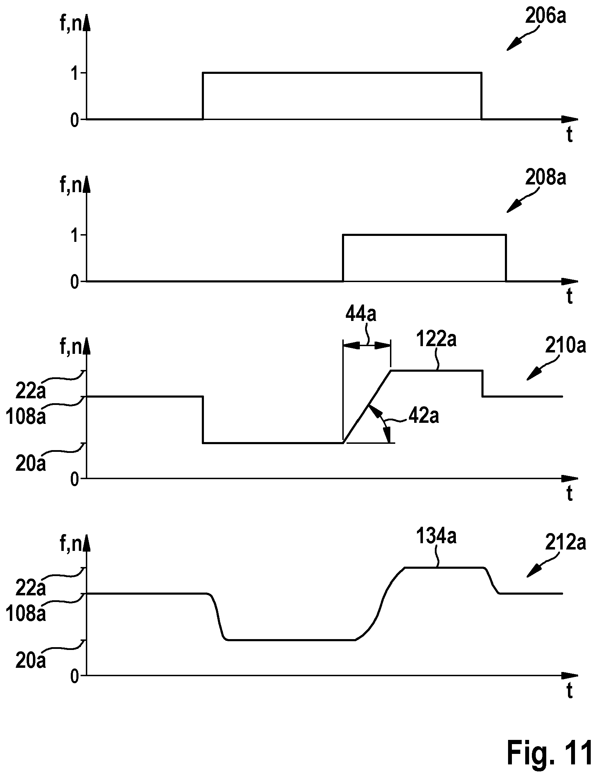

Figur 11 zeigt einen Signalverlauf eines Betriebs der Schlagwerkeinheit 10a. Das Diagramm 206a stellt einen Signalverlauf des Betriebswechselsensors 28a, das Diagramm 208a einen Signalverlauf der Schlagsensoreinheit 30a und das Diagramm 210a den Verlauf der Solldrehzahl 122a während der Zeit t dar. Die Solldrehzahl 122a kann insbesondere den Leerlaufwert 108a, den Startwert 20a und den Arbeitswert 22a einnehmen. Das Diagramm 212a zeigt die Istdrehzahl 134a. Die Istdrehzahl 134a folgt mit einer durch eine Trägheit insbesondere des Motors 48a und der Getriebeeinheit 50a bedingten Verzögerung zumindest weitgehend der Solldrehzahl 122a. Der Wechsel zwischen verschiedenen Solldrehzahlen 122a findet während einer Zeitdauer 44a statt. Die Zeitdauer 44a charakterisiert allgemein die Zeitdauer eines Wechsels zwischen zwei Solldrehzahlen 122a. Die Zeitdauer 44a wird durch einen Verzögerungsparameter 42a bestimmt, der die maximale Steigung des Solldrehzahlverlaufs bestimmt. Der Verzögerungsparameter 42a bestimmt, wie schnell bei einem von der Schlagsensoreinheit 30a erkannten Schlagwerkstart die Solldrehzahl 122a auf den Arbeitswert 22a wechselt, und ist im Beispiel der Winkel der Steigung der Solldrehzahl 122a während der Zeitdauer 44a. Der Verzögerungsparameter 42a kann ebenfalls gelernt werden, zum Beispiel indem die Zeitdauer 44a verlängert wird, falls der Wechsel vom Leerlaufbetrieb auf den Schlagbetrieb erfolglos war, weil zu schnell auf den Arbeitswert 22a gewechselt wurde.

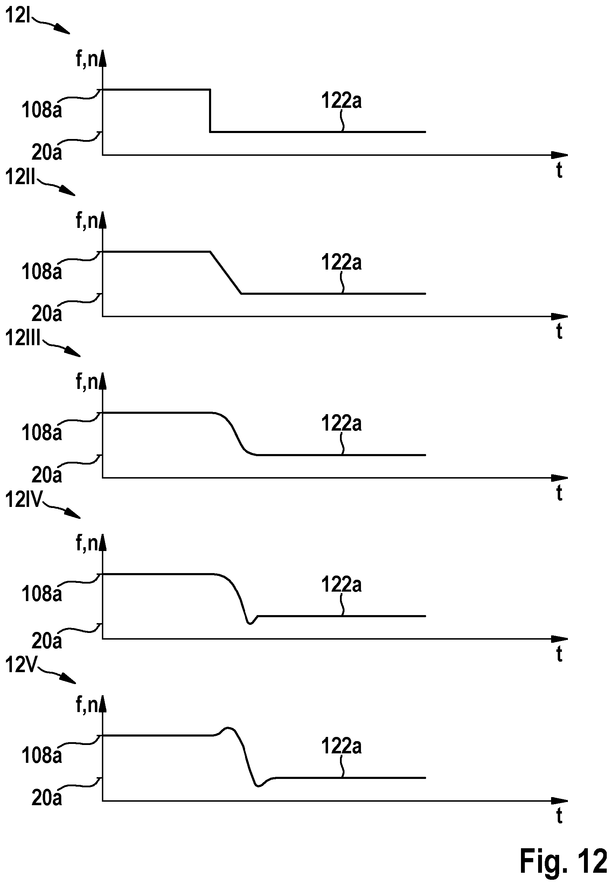

Der Übergang der Solldrehzahl 122a vom Leerlaufwert 108a auf den Startwert 20a kann abhängig von einer Betriebsart unterschiedliche Verläufe aufweisen. Diese sind in Figur 12 in den Diagrammen 12i - 12v dargestellt. Das Diagramm 12i zeigt einen direkten Sprung der Solldrehzahl 122a vom Leerlaufwert 108a auf den Startwert 20a. Der Startwert 20a kann so besonders schnell erreicht werden. Das Diagramm 12ii zeigt eine lineare Sollwertänderung mit konstanter Steigung. Auftretende Beschleunigungen sind geringer. Ein Komfort für den Benutzer kann so erhöht sein. Die Diagramme 12iii bis 12 v zeigen weitere mögliche Verläufe bei einem Sollwertwechsel, wobei der Verlauf von Diagramm 12iii einen reduzierten Ruck aufweist. Die Diagramme 12iv und 12v zeigen einen überschwingenden Verlauf der Sollwertänderung, der einen positiven Einfluss auf das Startverhalten haben kann. Die Zeitdauer der hier gezeigten Übergänge kann wiederum variabel sein. Die Schlagwerkeinheit 10a kann die hier gezeigten Verläufe abhängig von Betriebsarten und Betriebsbedingungen geeignet auswählen.

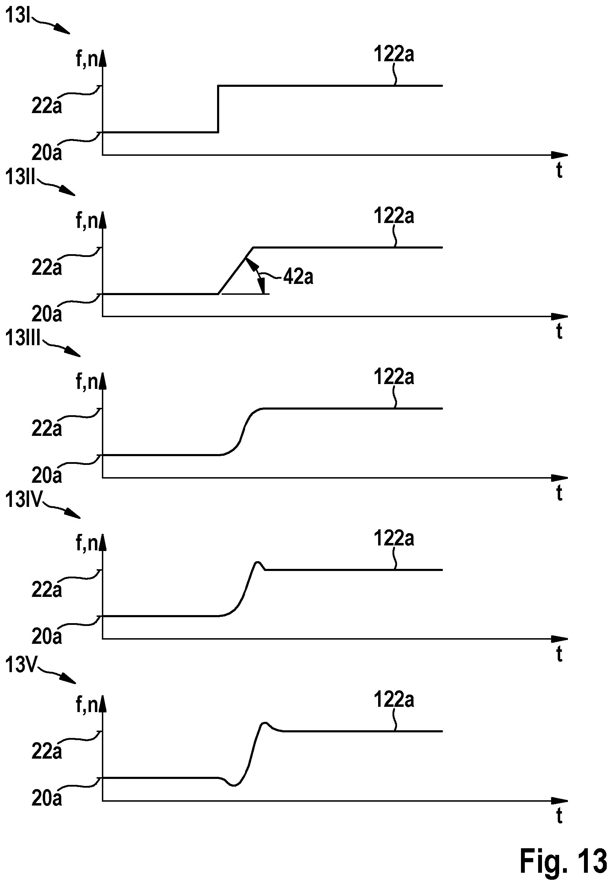

Der Übergang der Solldrehzahl 122a vom Startwert 20a auf den Arbeitswert 22a kann abhängig von einer Betriebsart ebenfalls unterschiedliche Verläufe aufweisen. Diese sind in Figur 13 in den Diagrammen 13i - 13v dargestellt. Das Diagramm 13i zeigt einen direkten Sprung der Solldrehzahl 122a vom Startwert 20a auf den Arbeitswert 22a. Der Arbeitswert 22a kann so besonders schnell erreicht werden. Das Diagramm 13ii zeigt eine lineare Sollwertänderung mit konstanter Steigung. Der Verzögerungsparameter 42a bestimmt die Steigung der Sollwertänderung. Auftretende Beschleunigungen sind geringer. Der Schlagwerkstart ist besonders zuverlässig. Die Diagramme 13iii bis 13 v zeigen weitere mögliche Verläufe bei einem Sollwertwechsel, wobei der Verlauf von Diagramm 13iii einen reduzierten Ruck aufweist. Die Diagramme 13iv und 13v zeigen einen überschwingenden Verlauf der Sollwertänderung. Die Zeitdauer 44a der hier gezeigten Übergänge kann wiederum variabel sein. Die Schlagwerkeinheit 10a kann die hier gezeigten Verläufe abhängig von Betriebsarten und Betriebsbedingungen geeignet auswählen. Insbesondere kann die Schlagwerkeinheit 10a die Verläufe abhängig von einer Arbeitsgangwahl 124a einstellen. Beim Schlagbohren ist ein sanfter Anstieg der Schlagstärke vorteilhaft. Die Zeitdauer 44a wird länger eingestellt, zum Beispiel im Bereich von 0.8 - 1.2 Sekunden. Beim Meißeln soll die gewählte Schlagstärke schnell zur Verfügung stehen. Es wird eine kurze Zeitdauer 44a eingestellt, vorteilhaft im Bereich von 0.1 - 0.5 Sekunden. Der Benutzer kann die Zeitdauer 44a auch über ein hier nicht näher dargestelltes Bedienelement direkt einstellen. Wahlweise wird die Zeitdauer abhängig von der Arbeitslage eingestellt, zum Beispiel kürzer als 0.5 Sekunden bei einer nach unten gerichteten Arbeitslage und länger als 1 Sekunde bei einer nach oben gerichteten Arbeitslage.

In einem weiteren Betriebsmodus wird der Schlagbetrieb aus dem Stillstand gestartet. Die Solldrehzahl 122a wird während der Zeitdauer 44a auf den Arbeitswert 22a gesteigert. Wird die Zeitdauer 44a lang genug gewählt, findet ein Wechsel vom Leerlaufbetrieb in den Schlagbetrieb statt, bevor der Grenzwert 104a überschritten ist. Es kann darauf verzichtet werden, dass die Steuereinheit 14a zu einem Schlagwerkstart zunächst den Startwert 20a einstellt. Die Zeitdauer 44a kann gelernt werden. Ist ein Wechsel vom Leerlaufbetrieb auf den Schlagbetrieb aus dem Stillstand erfolglos, wird beim nächsten Wechsel vom Leerlaufbetrieb auf den Schlagbetrieb aus dem Stillstand eine längere Zeitdauer 44a gewählt.

Die nachfolgende Beschreibung und die Zeichnungen weiterer Ausführungsbeispiele beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele verwiesen werden kann. Zur Unterscheidung der Ausführungsbeispiele sind anstelle des Buchstabens a des ersten Ausführungsbeispiels die Buchstaben b - d den Bezugszeichen der weiteren Ausführungsbeispiele nachgestellt.

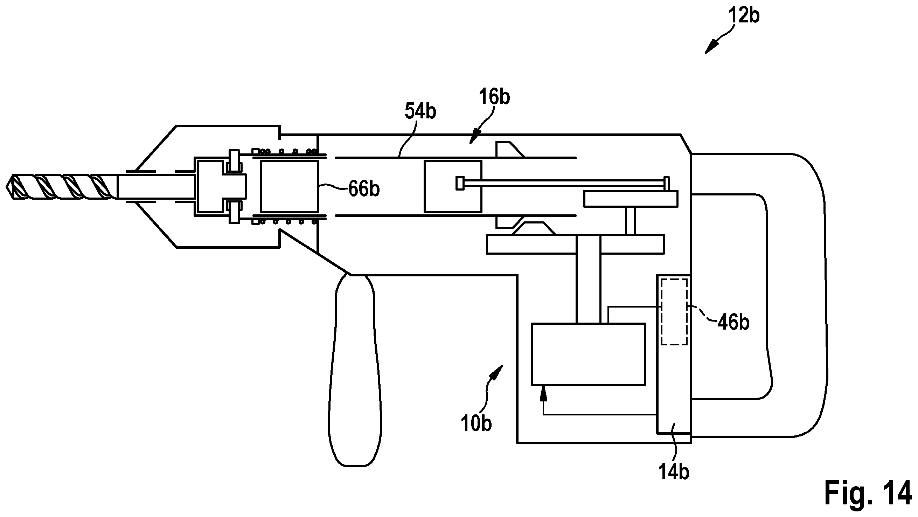

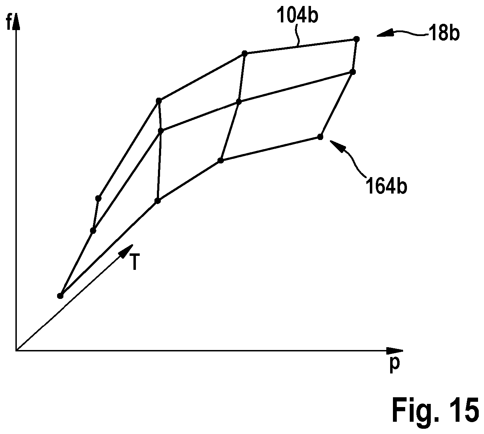

Figur 14 zeigt eine Schlagwerkeinheit 10b für einen Bohr- und Schlaghammer 12b mit einer Steuereinheit 14b, die dazu vorgesehen ist, ein pneumatisches Schlagwerk 16b zu steuern und zu regeln, in einem zweiten Ausführungsbeispiel. Die Schlagwerkeinheit 10b unterscheidet sich vom vorangegangenen Ausführungsbeispiel insbesondere durch eine Betriebsbedingungssensoreinheit 46b. Die Steuereinheit 14b ist dazu vorgesehen, eine Messgröße der Betriebsbedingungssensoreinheit 46b zu verarbeiten. Insbesondere ist die Steuereinheit 14b dazu vorgesehen, einen Grenzwert 104b für einen zuverlässigen Schlagwerkstart zu ermitteln (Figur 15). Die Betriebsbedingungssensoreinheit 46b ist dazu vorgesehen, eine Temperatur T und einen Umgebungsdruck P zu erfassen. Die Betriebsbedingungssensoreinheit 46b ist als Modul auf einer Platine der Steuereinheit 14b integriert. Die Betriebsbedingungssensoreinheit 46b erfasst eine Umgebungstemperatur. Die Temperatur hat einen Einfluss auf eine Viskosität von Schmierstoffen und auf eine Reibung eines Schlägers 66b mit dem Hammerrohr 54b. Der Umgebungsdruck hat insbesondere einen Einfluss auf eine Rückholbewegung des Schlägers 66b und auf den Grenzwert 104b für einen zuverlässigen Schlagwerkstart. Die Steuereinheit 14b ist weiter dazu vorgesehen, den Betriebsparameter 18b des Schlagwerks 16b festzulegen. Der Betriebsparameter 18b ist eine Soll-Schlagzahl und/oder Soll-Schlagwerkdrehzahl. Die Steuereinheit 14b legt den Betriebsparameter insbesondere druck- und/oder temperaturabhängig fest. Die Steuereinheit 14b kann mehrere Soll-Schlagzahlen ermitteln wie eine Soll-Schlagzahl als Arbeitswert für einen besonders effizienten Schlagbetrieb, und eine Soll-Schlagzahl als Startwert für einen Schlagwerkstart. Der Startwert und der Arbeitswert werden abhängig vom Grenzwert 104b festgelegt, insbesondere wird der Arbeitswert größer und der Startwert kleiner als der Grenzwert 104b festgelegt. In einem weiteren Betriebsmodus kann der Benutzer über ein hier nicht näher dargestelltes Drehrad einen relativen Arbeitswert zwischen 0 und 1 einstellen, der dann mit der druck- und/oder temperaturabhängigen Soll-Schlagzahl für den Schlagbetrieb multipliziert wird. Der Benutzer kann so bestimmen, mit wie viel Prozent der druck- und/oder temperaturabhängigen Soll-Schlagzahl der Schlagbetrieb stattfinden soll. Im vorliegenden Beispiel legt die Steuereinheit 14b den Betriebsparameter 18b abhängig von einem in der Steuereinheit 14b abgespeicherten Kennfeld 164b fest (Figur 15). Das Kennfeld 164b zeigt den Grenzwert 104b abhängig von der Temperatur T und dem Umgebungsdruck P. Zwischenwerte werden von der Steuereinheit 14b geeignet interpoliert. Sollen der Arbeitswert und der Startwert nicht berechnet werden, können für diese Werte alternativ weitere, hier nicht dargestellte Kennfelder vorgesehen sein. Die Steuereinheit 14b stellt den Startwert für den Schlagwerkstart ein, falls ein Arbeitswert gewählt ist, der bei der aktuellen Temperatur T und dem aktuellen Umgebungsdruck P höher als der Startwert ist. Da die Steuereinheit 14b den Betriebsparameter 18b mit Hilfe der Betriebsbedingungssensoreinheit 46b ermittelt, kann eine Schlagsensoreinheit zum Erkennen eines Schlagbetriebs entfallen. Bei einem Wechsel eines Betriebsmodus von einem Leerlaufmodus in einen Schlagmodus findet ein Schlagwerkbetrieb in den Grenzen des mit der Betriebssensoreinheit 46b ermittelten Betriebsparameters 18b ausreichend sicher statt.

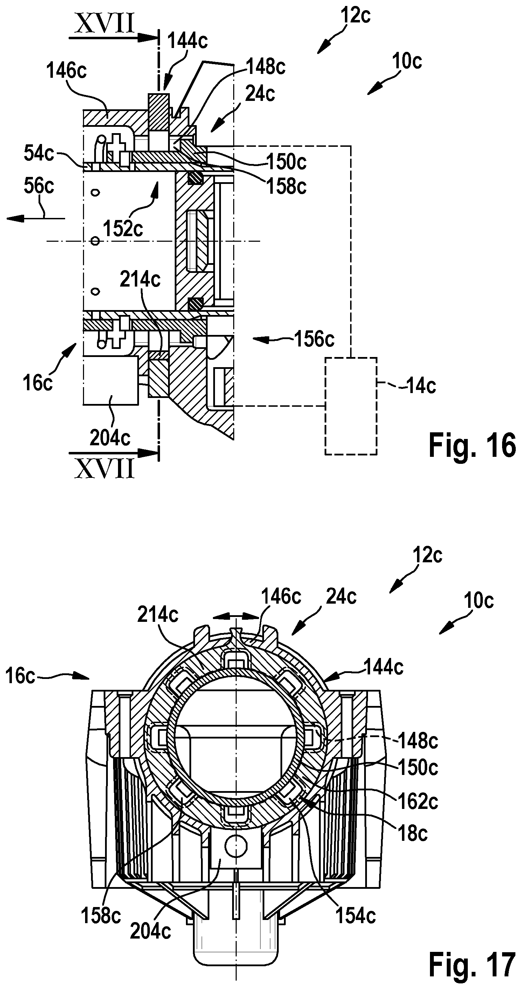

Figuren 16 und 17 zeigen eine alternative, nicht erfindungsgemäße, Schlagwerkeinheit 10c. Die Schlagwerkeinheit 10c unterscheidet sich von der vorhergehenden Schlagwerkeinheit 10b dahingehend, dass ein von einer Steuereinheit 14c festgelegter Betriebsparameter 18c eine Drosselkenngröße einer Entlüftungseinheit 24c ist. Ein Schlagraum in einem Hammerrohr wird von einem Schlagbolzen und einem Schläger begrenzt. Die Entlüftungseinheit 24c weist im Hammerrohr 54c Entlüftungsöffnungen zur Entlüftung des Schlagraums auf. Die Entlüftungseinheit 24c dient zu einem Druckausgleich des Schlagraums mit einer Umgebung eines Schlagwerks 16c. Die Entlüftungseinheit 24c weist eine Einstelleinheit 144c auf. Die Einstelleinheit 144c ist dazu vorgesehen, eine Entlüftung des in einer Schlagrichtung 68c vor dem Schläger angeordneten Schlagraums während eines Schlagvorgangs zu beeinflussen. Das Hammerrohr 54c des Schlagwerks 16c ist in einem Getriebegehäuse 146c eines Bohr- und Schlaghammers 12c gelagert. Das Getriebegehäuse 146c weist sternförmig angeordnete, einer Außenseite des Hammerrohrs 54c zugewandte Rippen 148c auf. Zwischen Hammerrohr 54c und Getriebegehäuse 146c ist in einem einem Exzentergetriebe zugewandten Endbereich 152c eine Lagerbuchse 150c eingepresst, die das Hammerrohr 54c am Getriebegehäuse 146c lagert. Die Lagerbuchse 150c bildet mit den Rippen 148c des Getriebegehäuses 146c Luftkanäle 154c, die mit den Entlüftungsöffnungen im Hammerrohr 54c in Verbindung stehen. Die Luftkanäle 154c bilden einen Teil der Entlüftungseinheit 24c. Der Schlagraum ist über die Luftkanäle 154c mit einem gegen die Schlagrichtung 68c hinter dem Hammerrohr 54c angeordneten Getrieberaum 156c verbunden. Die Luftkanäle 154c bilden Drosselstellen 158c, die einen Strömungsquerschnitt der Verbindung des Schlagraums mit dem Getrieberaum 156c beeinflussen. Die Einstelleinheit 144c ist dazu vorgesehen, den Strömungsquerschnitt der Drosselstellen 158c einzustellen. Die die Drosselstellen 158c bildenden Luftkanäle 154c bilden einen Übergang zwischen dem Schlagraum und dem Getrieberaum 156c. Ein Einstellring 214c weist sternförmig angeordnete, nach innen gerichtete Ventilfortsätze 162c auf. Abhängig von einer Drehstellung des Einstellrings 214c können die Ventilfortsätze 162c die Luftkanäle 154c ganz oder teilweise überdecken. Durch Verstellen des Einstellrings 214c kann der Strömungsquerschnitt eingestellt werden. Die Steuereinheit 14c verstellt den Einstellring 214c der Einstelleinheit 144c durch Drehen des Einstellrings 214c mit Hilfe eines Servoantriebs 204c. Wird die Entlüftungseinheit 24c teilweise geschlossen, kann der bei einer Bewegung des Schlägers in Schlagrichtung 68c entstehende Druck im Schlagraum nur langsam entweichen. Es bildet sich ein gegen die Bewegung des Schlägers in Schlagrichtung 68c gerichteter Gegendruck. Dieser Gegendruck unterstützt eine Rückholbewegung des Schlägers entgegen der Schlagrichtung 68c und damit einen Schlagwerkstart. Ist für die Schlagwerkdrehzahl ein überkritischer Arbeitswert gewählt, bei dem bei geöffneter Entlüftungseinheit 24c kein zuverlässiger Schlagwerkstart möglich ist, schließt die Steuereinheit 14c zu einem Wechsel von einem Leerschlagbetrieb in einen Schlagbetrieb die Entlüftungseinheit 24c teilweise. Durch den Gegendruck im Schlagraum wird der Start des Schlagbetriebs unterstützt. Nach erfolgtem Schlagwerkstart öffnet die Steuereinheit 14c die Entlüftungseinheit 24c wieder. Die Steuereinheit 14c kann den Betriebsparameter der Drosselkenngröße der Entlüftungseinheit 24c auch zu einer Leistungsregulierung nutzen.

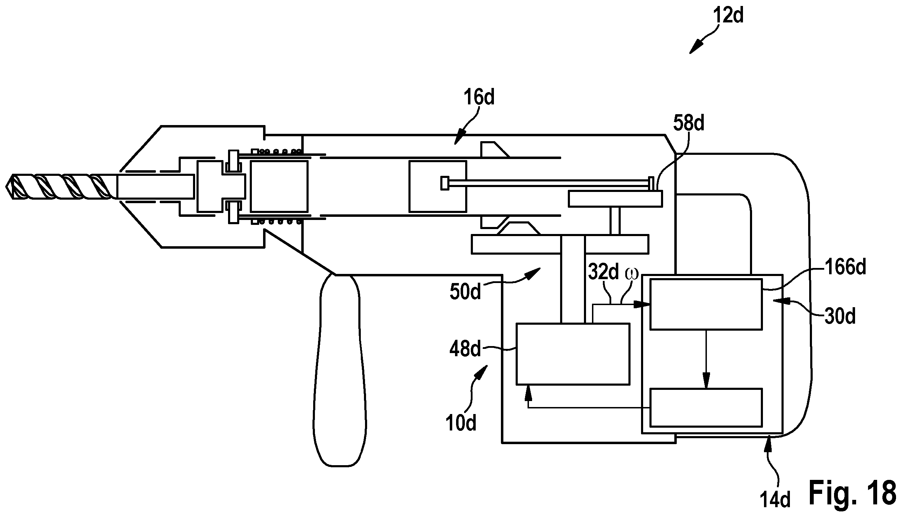

Figur 18 zeigt eine Schlagwerkeinheit 10d mit einer Steuereinheit 14d für ein Schlagwerk 16d in einem weiteren Ausführungsbeispiel. Die Schlagwerkeinheit 10d unterschiedet sich vom ersten Ausführungsbeispiel insbesondere dadurch, dass eine Schlagsensoreinheit 30d dazu vorgesehen ist, einen Schlagbetrieb durch Auswertung zumindest eines Antriebsparameters 32d zu erkennen. Die Schlagsensoreinheit 30d weist zu diesem Zweck einen Lastschätzer 166d auf. Der Lastschätzer 166d ist mit der Schlagsensoreinheit 30d auf der Steuereinheit 14d integriert und ist dazu vorgesehen, mit Hilfe einer gemessenen Motordrehzahl $\omega$ eines Motors 48d eine unbekannte Antriebslast $f_L$ zu schätzen. Die unbekannte Antriebslast $f_L$ ist ein auf den Motor 48d wirkendes unbekanntes Lastmoment $M_L$.

Ein Gesamtmoment M bezeichnet die Summe aller am Motor 48d angreifenden Momente. M beinhaltet ein Antriebsmoment des Motors $M_M$ und das unbekannte Lastmoment $M_L$. $J$ ist die Drehträgheit aller mit $\omega$ drehenden Teile des Motors 48d, einer Getriebeeinheit 50d mit einem Exzentergetriebe 58d, wobei die Getriebeübersetzungen berücksichtigt werden müssen. Es gilt dann der Drallsatz:

$$J\frac{d\omega(t)}{dt} = \sum M$$

Das Gesamtmoment M ist die Summe eines Moments $M_M$ des Motors 48d sowie von Momenten $M_{Li}$ von auf den Motor 48d wirkenden Lasten:

$$J\frac{d\omega(t)}{dt} = M_M + M_{L1} + M_{L2} + ...$$

Die Motordrehzahl $\omega$ lässt sich als Funktion der Zeit $\omega(t)$ darstellen, die sich aus einer sich nicht oder nur langsam ändernden Grunddrehzahl $\omega_0$ sowie sich schnell ändernden, hochdynamischen Anteilen $f_i(t)$ sowie der gesuchten Antriebslast $f_L$ zusammensetzt:

$$\omega(t) = \omega_0 + f_1(t) + f_2(t) + ... + f_L$$

Die Funktionen $f_i(t)$ beschreiben bekannte Lasten. Diese Gleichung erhält man durch eine Integration des Drallsatzes, die Funktionen $f$ weisen daher nicht die Dimension eines Drehmoments auf und werden daher mit dem Buchstaben $f$ statt $M$ bezeichnet. Dieses Vorgehen ist dem Fachmann bekannt. Die zu schätzende Last $f_L$ kann durch eine Subtraktion der bekannten Größen von der gemessenen Motordrehzahl $\omega(t)$ ermittelt werden. $f_M(t)$ ist dabei die Funktion des Moments $M_M$ des Motors 48d:

$$f_L = \omega(t) - \omega_0 - f_M(t) - f_1(t) - f_2(t) - ...$$

Die bekannten Lastanteile $f_i(t)$ beschreiben insbesondere Drehzahlschwankungen durch variable Getriebeübersetzungen, durch Motorungleichförmigkeiten und eine ungleichförmige Spannungsversorgung, z.B. durch eine Motoransteuerung. Es kann zwischen zeitperiodischen Lasten $f_i(t)$ und winkelperiodischen Lasten $f_i(\Phi)$ unterschieden werden. Eine zeitperiodische Last $f_i(t)$ kann zum Beispiel eine Spannungsschwankung insbesondere mit doppelter Netzfrequenz einer Stromversorgung eines Bohr- und Schlaghammers 12d sein, eine winkelperiodische Last $f_i(\Phi)$ kann zum Beispiel eine mit einer Drehstellung des Exzentergetriebes 58d wechselnde Übersetzung sein. Der Fachmann wird Lasten, deren Verlauf genau bekannt ist, als Rechenregel auf der Steuereinheit 14d abspeichern. Ein Schlagbetrieb wird erkannt, wenn $f_L$ einen festgelegten oder einstellbaren Schwellwert überschreitet und der Steuereinheit 14d signalisiert. Die weiteren Funktionen und die Anwendung der Schlagsensoreinheit 30d entsprechen dem ersten Ausführungsbeispiel.

**Patentansprüche**

1. Schlagwerkeinheit (10a-d), die als ein nichtlineares, schwingfähiges System ausgebildet ist, insbesondere für einen Bohr- und/oder Schlaghammer (12a-d), mit einer Steuereinheit (14a-d), die dazu vorgesehen ist, ein pneumatisches Schlagwerk (16a-d) zu steuern und/oder zu regeln, **dadurch gekennzeichnet, dass** die Steuereinheit (14a-d) dazu vorgesehen ist, in einem Betriebszustand, in dem ein Betriebsparameter (18a-c) als ein überkritischer Arbeitswert (22a) eingestellt ist, zu einem Wechsel von einem Leerlaufbetrieb in einen Schlagbetrieb den Betriebsparameter (18a-c) vorübergehend auf einen Startwert (20a) einzustellen, wobei der Betriebsparameter (18a-c) eine Schlagwerkdrehzahl (n) ist und der Startwert (20a) in einem Bereich der Schlagwerkdrehzahl (n) liegt, bei der ein Amplitudenfrequenzgang eines schwingenden Körpers des Schlagwerks (16a-d) eine eindeutige Lösung aufweist, und der überkritische Arbeitswert (22a) in einem Bereich der Schlagwerkdrehzahl (n) liegt, bei der der Amplitudenfrequenzgang eine mehrdeutige Lösung aufweist, und wobei der Startwert (20a) unterhalb des überkritischen Arbeitswerts (22a) liegt.

2. Schlagwerkeinheit (10a-d) nach Anspruch 1, **dadurch gekennzeichnet, dass** der Startwert (20a) derart ausgebildet ist, dass ein zuverlässiges Starten des Schlagwerks gewährleistet ist.

3. Schlagwerkeinheit (10a-d) nach einem der vorhergehenden Ansprüche, **gekennzeichnet durch** einen Betriebswechselsensor (28a), der dazu vorgesehen ist, einen Wechsel des Betriebszustands zu signalisieren.

4. Schlagwerkeinheit (10a-d) nach einem der vorhergehenden Ansprüche, **gekennzeichnet durch** eine Schlagsensoreinheit (30a; 30d), die dazu vorgesehen ist, einen Schlagbetrieb zu signalisieren.

5. Schlagwerkeinheit (10a-d) nach Anspruch 4, **dadurch gekennzeichnet, dass** die Schlagsensoreinheit (30d) dazu vorgesehen ist, den Schlagbetrieb durch Auswertung zumindest eines Antriebsparameters (32d) zu erkennen.

6. Schlagwerkeinheit (10a-d) zumindest nach Anspruch 4, **dadurch gekennzeichnet, dass** die Schlagsensoreinheit (30a) zumindest einen Sensor (34a) für eine mechanische Messgröße aufweist, der dazu vorgesehen ist, den Schlagbetrieb zu detektieren.

7. Schlagwerkeinheit (10a-d) zumindest nach Anspruch 4, **dadurch gekennzeichnet, dass** die Schlagsensoreinheit (30a) zumindest eine Filtereinheit (36a) aufweist, die dazu vorgesehen ist, einen Signalanteil (38a) aus einem Sensorsignal (40a) des Sensors (34a) zu isolieren.

8. Schlagwerkeinheit (10a-d) nach einem der vorhergehenden Ansprüche, **dadurch gekennzeichnet, dass** die Steuereinheit (14a) einen Lernmodus zur Ermittlung des Betriebsparameters (18a) aufweist.

9. Schlagwerkeinheit (10a-d) nach Anspruch 8, **dadurch gekennzeichnet, dass** die Steuereinheit (14a) im Lernmodus bei einem erfolgreichen Schlagwerkstart den Betriebsparameter (18a) abspeichert.

10. Schlagwerkeinheit (10a-d) nach einem der vorhergehenden Ansprüche, **dadurch gekennzeichnet, dass** die Steuereinheit (14a-d) zumindest einen Verzögerungsparameter (42a) aufweist, der dazu vorgesehen ist, eine Zeitdauer (44a) für einen Wechsel zwischen zwei Werten des Betriebsparameters (18a) zu beeinflussen.

11. Schlagwerkeinheit (10a-d) nach einem der vorhergehenden Ansprüche, **gekennzeichnet durch** eine Betriebsbedingungssensoreinheit (46b).

12. Schlagwerkeinheit (10a-d) nach Anspruch 11, **dadurch gekennzeichnet, dass** die Steuereinheit (14b) dazu vorgesehen ist, eine Messgröße der Betriebsbedingungssensoreinheit (46b) zu verarbeiten.

13. Handwerkzeugmaschine, insbesondere Bohr- und/oder Schlaghammer (12a-d), mit einer Schlagwerkeinheit (10a-d) nach einem der vorhergehenden Ansprüche.

**Claims**

1. Percussion mechanism unit (10a-d), which is designed as a non-linear, oscillatory system, in particular for a rotary and/or percussion hammer (12a-d), with a control unit (14a-d) that is provided to control a pneumatic percussion mechanism (16a-d) by open-loop and/or closed-loop control, **characterized in that** the control unit (14a-d) is provided, in an operating state in which an operating parameter (18a-c) is set as an above-critical working value (22a), to set the operating parameter (18a-c) temporarily to a starting value (20a) for the purpose of changing from an idling operating state to a percussive operating state, wherein the operating parameter (18a-c) is a percussion-mechanism rotational speed (n) and the starting value (20a) lies in a range of the percussion-mechanism rotational speed (n) in which an amplitude-frequency response of an oscillating body of the percussion mechanism (16a-d) has a single-valued solution, and the above-critical working value (22a) lies in a range of the percussion-mechanism rotational speed (n) in which the amplitude-frequency response has a multi-valued solution, and wherein the starting value (20a) lies below the above-critical working value (22a).

2. Percussion mechanism unit (10a-d) according to Claim 1, **characterized in that** the starting value (20a) is designed in such a way that a reliable starting of the percussion mechanism is ensured.

3. Percussion mechanism unit (10a-d) according to either one of the preceding claims, **characterized by** an operation change sensor (28a), which is provided to signal a change of the operating mode.

4. Percussion mechanism unit (10a-d) according to any one of the preceding claims, **characterized by** a percussion sensor unit (30a; 30d), which is provided to signal a percussive operating state.

5. Percussion mechanism unit (10a-d) according to Claim 4, **characterized in that** the percussion sensor unit (30d) is provided to identify the percussive operating state by evaluation of at least one drive parameter (32d).

6. Percussion mechanism unit (10a-d) at least according to Claim 4, **characterized in that** the percussion sensor unit (30a) has at least one sensor (34a) for a mechanical measured quantity, which sensor is provided to detect the percussive operating state.

7. Percussion mechanism unit (10a-d) at least according to Claim 4, **characterized in that** the percussion sensor unit (30a) has at least one filter unit (36a), which is provided to isolate a signal component (38a) out of a sensor signal (40a) of the sensor (34a).

8. Percussion mechanism unit (10a-d) according to any one of the preceding claims, **characterized in that** the control unit (14a) has a learning mode for determining the operating parameter (18a).

9. Percussion mechanism unit (10a-d) according to Claim 8, **characterized in that**, in the learning mode, the control unit (14a) stores the operating parameter (18a) in the case of a successful starting of the percussion mechanism.

10. Percussion mechanism unit (10a-d) according to any one of the preceding claims, **characterized in that** the control unit (14a-d) has at least one delay parameter (42a), which is provided to influence a time period (44a) for a change between two values of the operating parameter (18a).

11. Percussion mechanism unit (10a-d) according to any one of the preceding claims, **characterized by** an operating-condition sensor unit (46b).

12. Percussion mechanism unit (10a-d) according to Claim 11, **characterized in that** the control unit (14b) is provided to process a measured quantity of the operating-condition sensor unit (46b).

13. Hand-held power tool, in particular rotary and/or percussion hammer (12a-d), comprising a percussion mechanism unit (10a-d) according to any one of the preceding claims.

**Revendications**

1. Unité de percussion (10a-d) conçue sous forme de système oscillant non linéaire, en particulier pour un marteau perforateur et/ou démolisseur (12a-d), comprenant une unité de commande (14a-d) qui est prévue pour commander et/ou réguler un mécanisme de percussion pneumatique (16a-d), **caractérisée en ce que** l'unité de commande (14a-d) est prévue pour, dans un état de fonctionnement dans lequel un paramètre de fonctionnement (18a-c) est défini comme valeur de travail supercritique (22a), régler temporairement le paramètre de fonctionnement (18a-c) sur une valeur de démarrage (20a) lors du passage d'un mode de fonctionnement à vide à un mode de percussion, le paramètre de fonctionnement (18a-c) étant une vitesse de rotation (n) du mécanisme de percussion, et la valeur de démarrage (20a) se situant dans une gamme de vitesses de rotation (n) du mécanisme de percussion pour laquelle une réponse en fréquence d'amplitude d'un corps oscillant du mécanisme de percussion (16a-d) présente une solution unique, et la valeur de travail supercritique (22a) se situant dans une gamme de vitesses de rotation du mécanisme de percussion (n) pour laquelle la réponse en fréquence d'amplitude présente une solution ambiguë, et la valeur de démarrage (20a) étant inférieure à la valeur de travail supercritique (22a).

2. Unité de percussion (10a-d) selon la revendication 1, **caractérisée en ce que** la valeur de démarrage (20a) est conçue de manière à garantir un démarrage fiable du mécanisme de percussion.

3. Unité de percussion (10a-d) selon l'une des revendications précédentes, **caractérisée par** un capteur de changement de mode (28a) qui est prévu pour signaler un changement de l'état de fonctionnement.

4. Unité de percussion (10a-d) selon l'une des revendications précédentes, **caractérisée par** une unité (30a ; 30d) formant capteur de percussion qui est prévue pour signaler un fonctionnement en percussion.

5. Unité de percussion (10a-d) selon la revendication 4, **caractérisée en ce que** l'unité de capteur de percussion (30d) est prévue pour détecter le fonctionnement en percussion par l'évaluation d'au moins un paramètre d'entraînement (32d).

6. Unité de percussion (10a-d) au moins selon la revendication 4, **caractérisée en ce que** l'unité (30a) de détection de percussion comprend au moins un capteur (34a) pour une grandeur de mesure mécanique, qui est prévu pour détecter le fonctionnement en percussion.

7. Unité de percussion (10a-d) selon au moins la revendication 4, **caractérisée en ce que** l'unité (30a) formant capteur de percussion comprend au moins une unité de filtrage (36a) qui est prévue pour isoler une composante de signal (38a) d'un signal de capteur (40a) du capteur (34a).

8. Unité de percussion (10a-d) selon l'une des revendications précédentes, **caractérisée en ce que** l'unité de commande (14a) comprend un mode d'apprentissage pour déterminer le paramètre de fonctionnement (18a).

9. Unité de percussion (10a-d) selon la revendication 8, **caractérisée en ce que** l'unité de commande (14a) enregistre le paramètre de fonctionnement (18a) en mode apprentissage lors d'un démarrage réussi de l'unité de percussion.

10. Unité de percussion (10a-d) selon l'une des revendications précédentes, **caractérisée en ce que** l'unité de commande (14a-d) comprend au moins un paramètre de retard (42a) qui est prévu pour influencer une durée (44a) pour un changement entre deux valeurs du paramètre de fonctionnement (18a).

11. Unité de percussion (10a-d) selon l'une des revendications précédentes, **caractérisée par** une unité (46b) formant capteur de conditions de fonctionnement.

12. Unité de percussion (10a-d) selon la revendication 11, **caractérisée en ce que** l'unité de commande (14b) est prévue pour traiter une grandeur mesurée par l'unité (46b) formant capteur de condition de fonctionnement.

13. Outil à main, en particulier perceuse et/ou marteau à percussion (12a-d), comprenant une unité de percussion (10a-d) selon l'une des revendications précédentes.

Fig. 1

Fig. 2

140a

72a
64a
80a
82a  78a  74a  54a
16a
90a
12a

76a

66a

58a
56a
34a
146a

62a
60a  70a  84a  88a
28a
52a
50a
30a
36a

48a

10a

94a

14a

92a

EP 2 855 095 B1

18

Fig. 3

Fig. 4

Fig. 5

Fig. 6

Fig. 7

Fig. 8

Fig. 9

Fig. 10

Fig. 11

Fig. 12

Fig. 13

Fig. 14

12b

46b

14b

16b

54b

66b

10b

Fig. 15

Fig. 16

Fig. 17

Fig. 18